(19) Europäisches Patentamt / European Patent Office / Office européen des brevets

(11) **EP 4 117 225 A1**

(12) **EUROPEAN PATENT APPLICATION**
published in accordance with Art. 153(4) EPC

(43) Date of publication:
**11.01.2023  Bulletin 2023/02**

(51) International Patent Classification (IPC):
**H04L 9/32** $^{(2006.01)}$

(21) Application number: **20928311.8**

(86) International application number:
**PCT/CN2020/082614**

(22) Date of filing: **31.03.2020**

(87) International publication number:
**WO 2021/196043 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: HUAWEI TECHNOLOGIES CO., LTD.
Shenzhen, Guangdong 518129 (CN)

(72) Inventor: **CHEN, Youlei**
Shenzhen, Guangdong 518129 (CN)

(74) Representative: **Isarpatent**
**Patent- und Rechtsanwälte Barth**
**Charles Hassa Peckmann & Partner mbB**
**Friedrichstrasse 31**
**80801 München (DE)**

(54) **SECURE COMMUNICATION METHOD AND APPARATUS**

(57)    This application provides a secure communication method and apparatus, and may be applied to the field of autonomous driving technologies. The method includes: a first vehicle receives a first message from a first terminal device, sends a first negotiation message, and receives a first negotiation message from a second vehicle, where the first negotiation message of the second vehicle includes a first negotiation parameter of the second vehicle, a number of the second vehicle in a vehicle platoon, and a certificate of the second vehicle; after certificate verification of vehicles whose numbers are adjacent to a number of the first vehicle in the vehicle platoon succeeds, the first vehicle determines a second negotiation parameter based on first negotiation parameters of the vehicles whose numbers are adjacent to the number of the first vehicle; the first vehicle sends a second negotiation message, and receives a second negotiation message from the second vehicle; and after certificate verification of the second vehicle succeeds, the first vehicle generates a group key based on a second negotiation parameter of each second vehicle. A vehicle in the vehicle platoon may perform verification on a vehicle certificate in a group key negotiation process, so that a group key negotiation delay is shortened, and performance of information security and network security is improved.

FIG. 3

## Description

### TECHNICAL FIELD

This application relates to the field of autonomous driving technologies, and in particular, to a secure communication method and apparatus.

### BACKGROUND

An important scenario in an autonomous driving application is vehicle platooning. In the vehicle platooning scenario, the frontmost vehicle may act as a "locomotive", rear vehicles automatically follow, and the platooning vehicles almost synchronously accelerate, decelerate, turn, and brake.

In a vehicle platooning process, vehicle members in a group mainly communicate with each other in a V2X (vehicle to everything, vehicle to everything) manner. However, V2X is based on an open wireless communication network, and is more vulnerable to attacks than a conventional network. A damage caused to the field of vehicle platooning mainly based on V2X communication is also greater. Therefore, in a scenario in which autonomous driving vehicles travel in a platoon, a higher requirement is imposed on security of V2X communication.

Therefore, there is an urgent need to provide a solution for secure communication between vehicle platoon members in a vehicle platooning process in the autonomous driving field.

### SUMMARY

This application provides a secure communication method and apparatus, to implement secure communication between vehicle platoon members in a group traveling process in the autonomous driving field.

The method may be implemented by a terminal device, for example, a vehicle or a vehicle-mounted device (for example, a vehicle-mounted T-BOX (Telematics BOX)), or may be implemented by a component of a terminal device, for example, implemented by a component such as a processing apparatus, a circuit, or a chip in the terminal device, for example, a related chip that is in the T-BOX and that supports a wireless communication function, such as a system chip or a communication chip. The system chip is also referred to as a system on chip, or is referred to as a SoC chip. The communication chip may include a radio frequency processing chip and a baseband processing chip. The baseband processing chip is also sometimes referred to as a modem (modem). In a physical implementation, the communication chip may be integrated into the SoC chip, or may not be integrated into the SoC chip. For example, the baseband processing chip is integrated into the SoC chip, but the radio frequency processing chip is not integrated into the SoC chip.

According to a first aspect, an embodiment of this application provides a secure communication method. The method includes: a first vehicle receives a first message from a first terminal device, where the first message is used to indicate a number of the first vehicle in a vehicle platoon; the first vehicle sends a first negotiation message, where the first negotiation message includes a first negotiation parameter of the first vehicle, the number of the first vehicle in the vehicle platoon, and a certificate of the first vehicle; the first vehicle receives a first negotiation message from a second vehicle, where the second vehicle is another vehicle in the vehicle platoon other than the first vehicle, and the first negotiation message of the second vehicle includes a first negotiation parameter of the second vehicle, a number of the second vehicle in the vehicle platoon, and a certificate of the second vehicle; after certificate verification of vehicles whose numbers are adjacent to the number of the first vehicle in the vehicle platoon succeeds, the first vehicle determines a second negotiation parameter based on first negotiation parameters of the vehicles whose numbers are adjacent to the number of the first vehicle in the vehicle platoon; the first vehicle sends a second negotiation message, where the second negotiation message includes the second negotiation parameter, the number of the first vehicle in the vehicle platoon, and the certificate of the first vehicle; the first vehicle receives a second negotiation message from the second vehicle, where the second negotiation message of the second vehicle includes a second negotiation parameter of the second vehicle, the number of the second vehicle in the vehicle platoon, and the certificate of the second vehicle; and after certificate verification of the second vehicle succeeds, the first vehicle generates, based on a second negotiation parameter of each second vehicle, a group key for performing secure communication with any vehicle in the vehicle platoon.

Specifically, the second vehicle may be one or more other vehicles in the vehicle platoon other than the first vehicle, or may be any other vehicle.

According to the foregoing method, in a group key negotiation process, a vehicle in a vehicle platoon performs verification on identity information of the vehicle by using certificates carried in the first negotiation message and the second negotiation message that are used to determine the group key. There is no need to perform verification on identity information of each vehicle before the vehicle platoon is established. In this way, a delay caused by performing verification on a member vehicle in the vehicle platoon during vehicle platoon establishment is shortened, security and reliability in a group key negotiation process is improved, and secure communication between member vehicles in the vehicle platoon is implemented.

In a possible implementation method, the first negotiation message of the second vehicle further includes first signature data, where the first signature data is obtained through performing a signature operation by using the second negotiation parameter and the number of the second vehicle in the vehicle platoon.

According to the foregoing method, after certificate verification of the second vehicle succeeds, the first vehicle may further perform verification on the first signature data, to prevent the first negotiation message from being tampered in a transmission process, so that security and reliability in a group key negotiation process is further improved.

In a possible implementation method, that after certificate verification of vehicles whose numbers are adjacent to the number of the first vehicle in the vehicle platoon succeeds, the first vehicle determines a second negotiation parameter based on first negotiation parameters of the vehicles whose numbers are adjacent to the number of the first vehicle in the vehicle platoon includes: after the certificate verification of the second vehicle succeeds, and verification of the first signature data succeeds, the first vehicle determines the second negotiation parameter based on the first negotiation parameters of the vehicles whose numbers are adjacent to the number of the first vehicle in the vehicle platoon.

In a possible implementation method, the certificate of the second vehicle includes a public key of the second vehicle; and the first vehicle performs verification on the first signature data in the following manner: The first vehicle performs decryption on the first signature data by using the public key of the second vehicle, to obtain a first digital digest, and determines a first value based on the preset digest algorithm by using the second negotiation parameter of the second vehicle and the number of the second vehicle in the vehicle platoon. When it is verified that the second digital digest is consistent with the first value, the verification of the first signature data succeeds; or when it is verified that the second digital digest is inconsistent with the first value, the verification of the first signature data fails.

In a possible implementation method, the second negotiation message of the second vehicle further includes second signature data, where the second signature data is obtained through performing a signature operation by using the second negotiation parameter and the number of the second vehicle.

According to the foregoing method, in a group key negotiation process, the first vehicle receives the second negotiation message, and after the certificate verification of the second vehicle succeeds, the first vehicle may further perform verification on the second signature data, to prevent the second negotiation message from being tampered in a transmission process, so that security and reliability in a group key negotiation process is improved.

In a possible implementation method, that the first vehicle generates, after certificate verification of the second vehicle succeeds and based on a second negotiation parameter of each second vehicle, the group key for performing secure communication with any vehicle in the vehicle platoon includes: after the certificate verification of the second vehicle succeeds, and verification of the second signature data succeeds, the first vehicle determines the group key based on a second negotiation parameter of each second vehicle.

The certificate of the second vehicle includes a public key of the second vehicle; and the first vehicle performs verification on the second signature data in the following manner: The first vehicle performs decryption on the second signature data by using the public key of the second vehicle, to obtain a second digital digest, and determines a second value based on the preset digest algorithm by using the second negotiation parameter of the second vehicle and the number of the second vehicle in the vehicle platoon. When it is verified that the second digital digest is consistent with the second value, the verification of the second signature data succeeds; or when it is verified that the second digital digest is inconsistent with the second value, the verification of the second signature data fails.

In a possible implementation method, the first message includes a negotiation request field, vehicle information of the vehicle platoon, third signature data, and a certificate of the first device that sends the first message, where the negotiation request field is used to trigger a vehicle in the vehicle platoon to send a first negotiation message, the vehicle information of the vehicle platoon includes a vehicle identifier of each vehicle in the vehicle platoon and a number of the vehicle corresponding to the vehicle identifier in the vehicle platoon, the third signature data is obtained through encrypting a third digital digest by using a private key of the first terminal device, and the third digital digest is determined based on the preset digest algorithm by using the negotiation request field and the vehicle information of the vehicle platoon.

The certificate of the first terminal device includes a public key of the first terminal device; and after the first terminal device receives the first message, the method further includes: after certificate verification of the first terminal device succeeds, and certificate verification of the third signature data succeeds, the first vehicle determines, based on the vehicle information of the vehicle platoon, the number corresponding to the vehicle identifier of the first vehicle.

In a possible implementation method, the method further includes: the first vehicle performs an operation based on a first preset algorithm by using a first random number generated by the first vehicle, to obtain the first negotiation parameter.

In a possible implementation method, that the first vehicle determines the second negotiation parameter based on the second negotiation parameter of the second vehicle includes: the first vehicle performs an operation based on a second preset algorithm by using the first random number generated by the first vehicle and the first negotiation parameter of the second vehicle, to obtain the second negotiation parameter.

In a possible implementation method, that the first vehicle generates, based on a second negotiation parameter of each second vehicle, the group key for performing secure communication with any vehicle in the vehicle platoon includes: the first vehicle performs an operation based on a third preset algorithm by using the first random number generated by the first vehicle, the second negotiation parameter of the second vehicle, and a second negotiation parameter of a second vehicle whose number is after the number of the first vehicle in the vehicle platoon, to obtain the group key.

According to the foregoing method, each vehicle in the vehicle platoon generates the group key based on a random number of the vehicle, a second negotiation parameter of another vehicle, and the third preset algorithm. The random number of each vehicle does not need to be transmitted. Therefore, security is higher, and the group key cannot be calculated even if the second negotiation message is obtained by another vehicle. The group key negotiation process in this embodiment of this application is simpler, with small calculation amount and higher security.

In a possible implementation method, the method further includes: before sending data to any vehicle in the vehicle platoon, the first vehicle encrypts, by using the group key, the data that needs to be exchanged, and sends the encrypted data to the target vehicle; and/or after receiving data from any vehicle in the vehicle platoon, the first vehicle decrypts the received data by using the group key.

According to a second aspect, an embodiment of this application provides a secure communication method. The method includes: the first terminal device obtains vehicle information of a vehicle platoon from an application server, where the vehicle information of the vehicle platoon includes a vehicle identifier of each vehicle in the vehicle platoon and a number of the vehicle corresponding to the vehicle identifier in the vehicle platoon; and the first terminal device sends a first message to each vehicle in the vehicle platoon, where the first message includes a negotiation request field, the vehicle information of the vehicle platoon, third signature data, and a certificate of the first device that sends the first message, where the negotiation request field is used to trigger a vehicle in the vehicle platoon to send a first negotiation message, the vehicle information of the vehicle platoon includes a vehicle identifier of each vehicle in the vehicle platoon and a number of the vehicle corresponding to the vehicle identifier in the vehicle platoon, the third signature data is obtained through encrypting a third digital digest by using a private key of the first terminal device, and the third digital digest is determined based on the preset digest algorithm by using the negotiation request field and the vehicle information of the vehicle platoon.

In a possible implementation method, the method further includes: the first terminal device receives a first negotiation message from any other vehicle in the vehicle platoon, and the first terminal device sends a first data packet to any other vehicle in the vehicle platoon, where the first data packet includes a first negotiation message of any vehicle in the vehicle platoon; and/or the first terminal device receives a second negotiation message from any other vehicle in the vehicle platoon, and the first terminal device sends a second data packet to any other vehicle in the vehicle platoon, where the second data packet includes a second negotiation message of any vehicle in the vehicle platoon.

In a possible implementation method, the first terminal device is a vehicle with any number in the vehicle platoon, or the first terminal device is a roadside device RSU.

According to a third aspect, an embodiment of this application provides a terminal device. The apparatus has a function of implementing the method in the first aspect. The function may be implemented by hardware, or may be implemented by software, or implemented by hardware executing corresponding software. The apparatus includes one or more modules corresponding to the foregoing function, for example, includes a transceiver unit and a processing unit.

In a possible design, the apparatus may be a chip or an integrated circuit.

In a possible design, the apparatus includes a memory, a processor, and a transceiver. The transceiver is configured to receive and send data. The memory is configured to store a program or instructions executed by the processor. When the program is executed by the processor or the instructions are executed by the processor, the apparatus may perform the method in the first aspect and the various possible designs of the first aspect.

In a possible design, the apparatus may be a vehicle.

According to a fourth aspect, an embodiment of this application provides a terminal device. The apparatus has a function of implementing the method in the second aspect. The function may be implemented by hardware, or may be implemented by software, or implemented by hardware executing corresponding software. The apparatus includes one or more modules corresponding to the foregoing function, for example, includes a transceiver unit and a processing unit.

In a possible design, the apparatus may be a chip or an integrated circuit.

In a possible design, the apparatus includes a memory, a processor, and a transceiver. The transceiver is configured to receive and send data. The memory is configured to store a program or instructions executed by the processor. When the program is executed by the processor or the instructions are executed by the processor, the apparatus may perform the method in the first aspect and the various possible designs of the first aspect.

In a possible design, the apparatus may be a vehicle or an RSU.

According to a fifth aspect, an embodiment of this application provides an apparatus. The apparatus includes a processor, a memory, and a communication interface. The communication interface is configured to receive a signal or send a signal; the memory is configured to store a program or instruction code; and the processor is configured to invoke the program or instruction code from the memory, to perform the method according to the first aspect and the various possible designs of the first aspect, or perform the method according to the second aspect and the various possible designs of the second aspect.

According to a sixth aspect, an embodiment of this application provides an apparatus. The communication apparatus includes a processor and an interface circuit. The interface circuit is configured to receive a program or instruction code and transmit the program or the instruction code to the processor; and the processor runs the program or the instruction code, to perform the method according to the first aspect and the various possible designs of the first aspect, or perform the method according to the second aspect and the various possible designs of the second aspect.

According to a seventh aspect, this application provides an apparatus. The apparatus may be a terminal device, or may be a chip used for a terminal device. The apparatus has a function of implementing the embodiments of the first aspect or the second aspect. The function may be implemented by hardware, or may be implemented by hardware executing corresponding software. The hardware or the software includes one or more modules corresponding to the function.

According to an eighth aspect, an embodiment of this application provides a computer-readable storage medium. The computer-readable storage medium is configured to store a program or instructions. When the program is executed or the instructions are executed, the method in the first aspect and the various possible designs of the first aspect or the method in the second aspect and the various possible designs of the second aspect is implemented.

According to a ninth aspect, an embodiment of this application provides a computer program product including instructions. When the instructions are executed, the method in the first aspect and the various possible designs of the first aspect or the method in the second aspect and the various possible designs of the second aspect is implemented.

According to a tenth aspect, an embodiment of this application further provides a secure communication system. The secure communication system includes an application server, a first terminal device, and a secure communication apparatus. The secure communication apparatus may perform a corresponding function in any one of the first aspect or the possible implementations of the first aspect, and the first terminal device may perform a corresponding function in any one of the second aspect or the possible implementations of the second aspect. For details, refer to detailed descriptions in the method example. Details are not described herein again.

## BRIEF DESCRIPTION OF DRAWINGS

FIG. 1 is a schematic diagram of a system architecture according to an embodiment of this application;
FIG. 2 is a schematic diagram of another system architecture according to an embodiment of this application;
FIG. 3 is a schematic flowchart of a secure communication method according to an embodiment of this application;
FIG. 4 is a schematic flowchart of a secure communication method according to Embodiment 1 of this application;
FIG. 5 is a schematic flowchart of a secure communication method according to Embodiment 2 of this application;
FIG. 6 is a schematic diagram of a first-round broadcast scenario in a group key negotiation process according to Embodiment 2 of this application;
FIG. 7 is a schematic diagram of a second-round broadcast scenario in a group key negotiation process according to Embodiment 2 of this application;
FIG. 8A and FIG. 8B are a schematic flowchart of another secure communication method according to Embodiment 3 of this application;
FIG. 9 is a schematic diagram of a structure of a secure communication apparatus according to an embodiment of this application; and
FIG. 10 is a schematic diagram of a structure of a secure communication apparatus according to an embodiment of this application.

## DESCRIPTION OF EMBODIMENTS

To make the objectives, technical solutions, and advantages of this application clearer, the following further describes this application in detail with reference to the accompanying drawings. A specific operation method in method embodiments may also be applied to a device embodiment or a system embodiment. In the descriptions of this application, unless otherwise specified, "a plurality of' means "two or more than two".

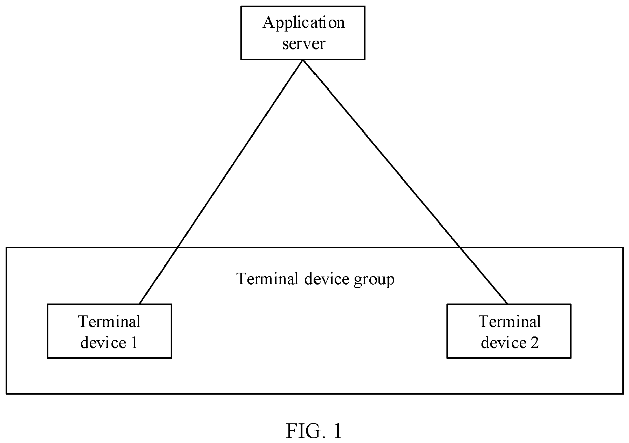

FIG. 1 shows an example of a schematic diagram of a system architecture to which embodiments of this application are applicable. As shown in FIG. 1, the system architecture includes a network device and a terminal device group. The terminal device group includes at least two terminal devices, and at least two terminal devices may form a terminal device group. The terminal device group may include a primary control terminal device. Another terminal device other than the primary control terminal device may be referred to as a secondary device.

The network device is mainly configured to: store device information of a terminal device, perform communication interaction with the terminal device, establish the terminal device group, and formulate a number for a terminal device in the terminal device group.

The terminal device may be a device having a wireless transceiver function. In different application scenarios, representation forms of the terminal device are different. For example, in a conventional mobile communication scenario, a terminal device may be a mobile phone, a tablet computer, or the like. In an internet of things (internet of things, IoT) communication scenario, a terminal device may be a mobile internet device, a wearable device, or various wireless terminals in industry or smart home. In an internet of vehicles or vehicle to everything (vehicle to everything, V2X) communication scenario, a terminal device may be a vehicle, an on board unit (on board unit, OBU) in the internet of vehicles, a road side unit (road side unit, RSU), road side equipment (road side equipment, RSE), a vehicle-mounted electronic control unit (electronic control unit, ECU), and the like.

It should be noted that in the system provided in this application, the terminal device may establish a communication connection to an application server through a V2X communication network, to perform communication interaction. For example, after establishing a connection to the application server, the terminal device may obtain device information of any group member terminal device in the terminal device group from the application server. Terminal devices may establish a communication connection to each other through a V2V or I2V (a scenario including an RSU) communication network, to perform communication interaction.

For example, the primary control terminal device may be further configured to: perform communication interaction with the application server, obtain information about terminal devices in the terminal device group, initiate a group establishment request to the terminal devices in the terminal device group, and perform communication interaction with a secondary device after the secondary device joins the terminal device group, to complete a group key required for communication interaction in the terminal device group. The secondary device may be further configured to: respond to the group establishment request initiated by the primary control terminal device, and after joining the terminal device group, perform communication interaction with the primary control terminal device, to complete the group key required for communication interaction in the terminal device group. Data that needs to be exchanged between the primary control terminal device and a secondary device and between secondary devices may be encrypted by using the group key, to implement secure communication.

In embodiments of this application, an apparatus configured to implement a function of a terminal device may be a terminal device, or may be an apparatus, for example, a chip system, that can support the terminal device in implementing the function. The apparatus may be mounted in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal device.

It should be understood that the two terminal devices shown in FIG. 1 are merely examples, and are not intended to limit this application. The network device in FIG. 1 may provide services for a plurality of terminal devices. A quantity of terminal devices in a communication system is not specifically limited in this application. In addition, the architecture shown in FIG. 1 may be applied to a plurality of communication scenarios, for example, the 5th generation (the 5th generation, 5G) communication system, a future 6th generation communication system and another evolved communication system, the 4th generation (the 4th generation) communication system, vehicle to everything (vehicle to everything, V2X), long term evolution-internet of vehicles (LTE-vehicle, LTE-V), vehicle to vehicle (vehicle to vehicle, V2V), internet of vehicles, machine type communication (machine type communications, MTC), and internet of things (internet of things, IoT), long term evolution-machine to machine (LTE-machine to machine, LTE-M), and machine to machine (machine to machine, M2M). This is not limited in this application.

The following describes the foregoing system architecture in detail.

Based on the system architecture shown in FIG. 1, for example, the system architecture includes P terminal devices, and the P terminal devices are one terminal device group, where P is an integer greater than or equal to 1. The P terminal devices may be respectively a terminal device 1, a terminal device 2, ..., and a terminal device P, where 1, 2, ..., and P may be understood as numbers allocated by the application server to secondary devices in the terminal device group.

Optionally, the P terminal devices include a primary control terminal device. The application server may formulate a number for the primary control terminal device, or may not formulate a number for the primary control terminal device. For example, when no number is formulated for the primary control terminal device, numbers of P-1 secondary devices other than the primary control terminal device may be 1, 2, ..., and P-1 respectively.

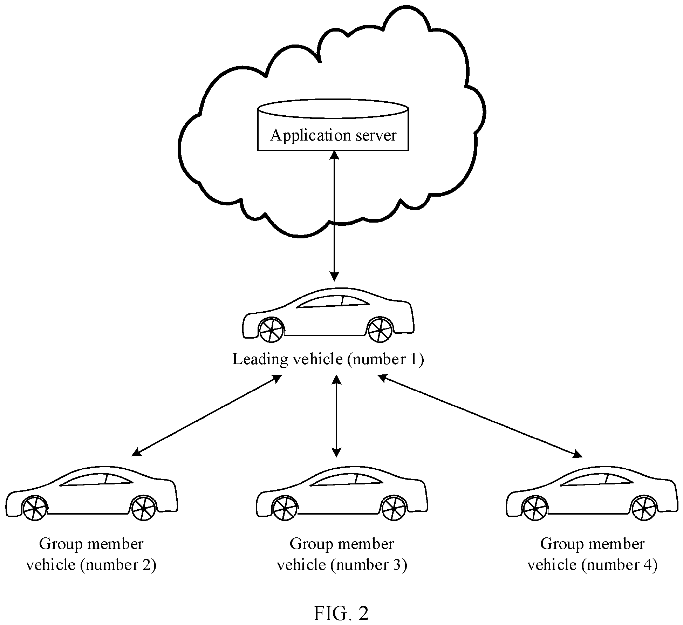

For ease of describing embodiments of this application, the following describes a possible system architecture by using an example in which P=4. The system architecture may be applicable to an internet of vehicles system, for example, an autonomous driving vehicle system. When the system architecture is applied to the autonomous driving vehicle system, a network device may be an application server. When a terminal device is a vehicle, a terminal device group may be referred to as a vehicle platoon, a primary control terminal device may be referred to as a leading vehicle, and a secondary device may be referred to as a group member vehicle. FIG. 2 is a schematic diagram of another system architecture according to an embodiment of this application. The system architecture includes an application server, a leading vehicle, and three group member vehicles. It should be noted that a number of the leading vehicle shown in FIG. 2 is merely an example. The leading vehicle in this embodiment of this application may be a vehicle with any number in a vehicle platoon. This is not limited in this embodiment of this application.

The following explains and describes the foregoing devices by using a scenario in FIG. 2 as an example, to facilitate understanding of a person skilled in the art.

(1) The application server is mainly configured to: configure, temporarily set up, maintain, and manage a vehicle platoon. Functions of the application server include but are not limited to: preconfiguring a certificate of a managed vehicle platoon and vehicle information of each member vehicle in the vehicle platoon, and formulating vehicle numbers for all vehicles in the vehicle platoon. For example, the vehicle numbers are consecutive and non-repeated positive integers. For example, the vehicle numbers are 1, 2, 3, ..., n, where n is a positive integer. Each vehicle in the vehicle platoon has a different vehicle number. Communication may be performed with a vehicle in the vehicle platoon. For example, the leading vehicle sends a vehicle platoon information obtaining request to the application server, to obtain information such as vehicle information, a number, and a certificate that are of each vehicle in the vehicle platoon in which the leading vehicle is located. The application server sends, to the leading vehicle, the information such as vehicle information, a number, and a certificate that are of each vehicle in the vehicle platoon. For example, a communication manner between the vehicle and the application server may be a V2X communication manner. For another example, the vehicle periodically reports location information of the vehicle to the application server. The application server obtains the location information of the vehicle, and temporarily establishes a vehicle platoon based on the location information of the vehicle.

For example, the application server may be a vehicle network application server (V2X application server, V2X AS).

(2) The leading vehicle is mainly configured to communicate with the application server, to obtain vehicle information of any vehicle in the vehicle platoon, for example, a vehicle identifier, a vehicle number, or a vehicle certificate. The leading vehicle is further configured to communicate with a group member vehicle. For example, the leading vehicle performs a group key negotiation process with the group member vehicle, to determine a group key, and perform encrypted communication by using the group key.

The leading vehicle may be a vehicle with any number or traveling location in the vehicle platoon. This is not limited in this embodiment of this application.

(3) The group member vehicle is mainly configured to: listen to a vehicle platoon establishment request initiated by the leading vehicle, enter the group key negotiation process of the vehicle platoon after joining the vehicle platoon, determine the group key, and perform encrypted communication by using the group key, for example, perform encrypted or decrypted communication on data interacted in the vehicle platoon by using the group key.

(4) V2X: In Release (Rel)-14/15/16, the V2X is successfully initiated as a major application in a device-to-device (device-to-device, D2D) technology. On a basis of an existing D2D technology, a specific application requirement of the V2X is to be optimized in the V2X, to further reduce an access delay of a V2X device and resolve a resource conflict problem. The V2X specifically includes several application requirements such as direct communication of V2V, V2I, and V2P, and communication interaction of V2N. V2V refers to communication between vehicles, V2P refers to communication between a vehicle and a person (including a pedestrian, a bicycle rider, a driver, or a passenger), and V2I refers to communication between the vehicle and a network device such as an RSU. In addition, V2N may be included in V2I. V2N refers to communication between the vehicle and a base station/a network. The RSU includes two types: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU.

For example, in this embodiment of this application, in the vehicle platoon, the primary control terminal device may alternatively be an RSU. The RSU may have a vehicle number, or may not have a vehicle number. The following specifically describes the technical solutions of this application in this scenario.

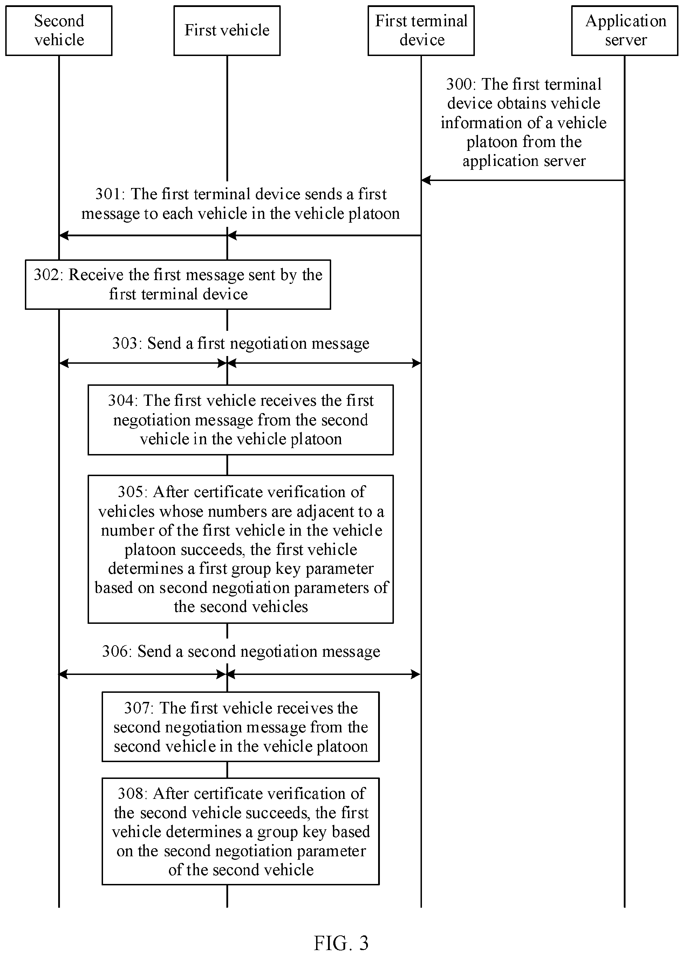

To resolve the problem mentioned in the background, this application provides a secure communication method. As shown in FIG. 3, the method includes the following steps.

Step 300: A first terminal device obtains vehicle information of a vehicle platoon from an application server.

The vehicle information of the vehicle platoon includes a vehicle identifier of each vehicle in the vehicle platoon and a number of the vehicle that corresponds to the vehicle identifier and that is in the vehicle platoon.

Step 301: The first terminal device sends a first message to each member vehicle in the vehicle platoon.

The first message is used to indicate a number of the first vehicle in the vehicle platoon.

Step 302: The first vehicle receives the first message sent by the first terminal device.

Step 303: The first terminal device sends a first negotiation message.

The first negotiation message includes a first negotiation parameter of the first vehicle, the number of the first vehicle in the vehicle platoon, and a certificate of the first vehicle.

Step 304: The first vehicle receives a first negotiation message from a second vehicle in the vehicle platoon.

The second vehicle is any vehicle in the vehicle platoon other than the first vehicle.

The first negotiation message of the second vehicle includes a first negotiation parameter of the second vehicle, a number of the second vehicle in the vehicle platoon, and a certificate of the second vehicle.

Step 305: After certificate verification of vehicles whose numbers are adjacent to the number of the first vehicle in the vehicle platoon succeeds, the first vehicle determines a second negotiation parameter based on first negotiation parameters of the vehicles whose numbers are adjacent to the number of the first vehicle in the vehicle platoon.

Step 306: The first terminal device sends a second negotiation message.

The second negotiation message includes the second negotiation parameter, the number of the first vehicle in the vehicle platoon, and the certificate of the first vehicle.

Step 307: The first vehicle receives a second negotiation message from the second vehicle in the vehicle platoon.

The second negotiation message of the second vehicle includes a second negotiation parameter of the second vehicle, the number of the second vehicle in the vehicle platoon, and the certificate of the second vehicle. The second vehicle includes the second vehicle.

Step 308: After certificate verification of any second vehicle succeeds, the first vehicle generates, based on a second negotiation parameter of each second vehicle, a group key for performing secure communication with any vehicle in the vehicle platoon.

It should be noted that the foregoing steps are merely examples. In this embodiment of this application, the application server may perform communication interaction with any vehicle in the vehicle platoon. For example, another implementation of step 300 is as follows: The application server sends the vehicle information of the vehicle platoon to some or all vehicles in the vehicle platoon.

The foregoing manner is applicable to any vehicle in the vehicle platoon. A group key negotiation process is described by using one of the vehicles as an example. The vehicle is referred to as a first vehicle below. It may be understood that any vehicle in the vehicle platoon performs an operation of the first vehicle.

A first vehicle Ui generates, after obtaining a number of the first vehicle Ui in a vehicle platoon from a first terminal device, a first negotiation parameter Ni, and encapsulates, into a first negotiation message Mi, the first negotiation parameter Ni generated by the first vehicle Ui, a number of the first vehicle Ui in the vehicle platoon, and a certificate of the first vehicle Ui. The first vehicle Ui sends the first negotiation message Mi, and receives a first negotiation message Mj sent by a second vehicle Uj in the vehicle platoon, where the first negotiation message Mj includes a first negotiation parameter Nj of the second vehicle Uj, a number of the second vehicle Uj in the vehicle platoon, and a certificate of the second vehicle Uj. The second vehicle Uj is any vehicle in the vehicle platoon other than the first vehicle Ui.

After certificate verification of the second vehicle Uj succeeds, the first vehicle Ui generates a second negotiation parameter Ni' by using a first negotiation parameter Ni-1 and a first negotiation parameter Ni+1 that are of vehicles whose numbers are adjacent to the number of the first vehicle Ui in the vehicle platoon. The first vehicle Ui sends a second negotiation message Mi', where the second negotiation message Mi' includes a second negotiation parameter Ni', the number of the first vehicle Ui in the vehicle platoon, and the certificate of the first vehicle Ui. In addition, the first vehicle Ui receives a second negotiation message Nj' sent by the second vehicle Uj in the vehicle platoon, where the second negotiation message Mj' includes a second negotiation parameter Nj' of the second vehicle Uj, the number of the second vehicle Uj in the vehicle platoon, and the certificate of the second vehicle Uj.

After the certificate verification of the second vehicle Uj succeeds, a group key is generated by using a second negotiation parameter Ni' of each second vehicle Uj in the vehicle platoon.

According to the foregoing method, in the group key negotiation process, verification is performed on member vehicle in the vehicle platoon. In this way, a delay caused by performing verification on a member vehicle in the vehicle platoon during vehicle platoon establishment is shortened, security and reliability in a group key negotiation process is improved, and secure communication between member vehicles in the vehicle platoon is implemented.

The following describes in detail the solution of the embodiment shown in FIG. 2 with reference to specific embodiments (Embodiment 1 to Embodiment 4).

**[Embodiment 1]**

In Embodiment 1, a preconfiguration phase of a vehicle platoon is mainly described.

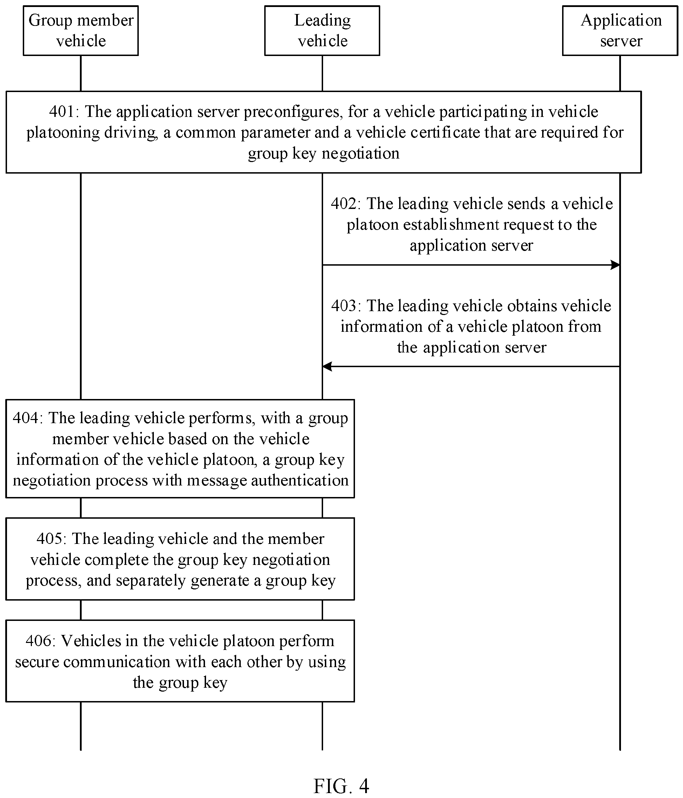

FIG. 4 is a schematic flowchart corresponding to a secure communication method according to Embodiment 1 of this application. FIG. 4 includes the following steps.

Step 401: An application server preconfigures, for a vehicle participating in automatic driving platooning, a common parameter and a vehicle certificate that are required for group key negotiation.

The application server configures a common parameter and a vehicle certificate for a vehicle that is managed by the application server and that supports participating in platooning. The common parameter is a common parameter included in an algorithm for calculating a group key when the vehicle joins a vehicle platoon and performs a group key negotiation process with a member vehicle in the vehicle platoon.

The vehicle certificate is issued by a vehicle certificate authority to the vehicle, and is used to uniquely identify a legal identity of the vehicle. For example, the vehicle certificate may alternatively be preconfigured by a vehicle administrator in the application server, and may be delivered by the application server to the vehicle. For another example, alternatively, the application server may interact with the vehicle certificate authority, to obtain the vehicle certificate. For example, the application server sends a certificate obtaining request to the vehicle certificate authority, where the request carries an identifier of the vehicle. The vehicle certificate authority feeds back, to the application server, the vehicle certificate requested by the certificate obtaining request.

Step 402: A leading vehicle sends a vehicle platoon establishment request to the application server, and correspondingly, the application server receives the vehicle platoon establishment request sent by the leading vehicle.

The leading vehicle herein is merely a substitute, and may be a vehicle at a head of a to-be-established vehicle platoon, or may be a vehicle at another location. Herein, the leading vehicle is used to indicate a vehicle that initiates the vehicle platoon establishment request.

For example, the vehicle platoon establishment request may be used to indicate the application server to establish a vehicle platoon for the leading vehicle. For example, the application server may further select, based on information such as a location and a traveling direction of the vehicle, one or more vehicles in an area near the leading vehicle to form the vehicle platoon with the leading vehicle. Alternatively, the leading vehicle may establish the vehicle platoon. The vehicle platoon establishment request carries vehicle identifiers of vehicles in the vehicle platoon. After performing verification on each vehicle identifier and agreeing to establish the vehicle platoon, the application server formulates numbers for the vehicles in the vehicle platoon.

For another example, the vehicles included in the vehicle platoon and the vehicle information may alternatively be preconfigured on the application server. For example, for a plurality of transport trucks, a vehicle administrator configures the plurality of transport trucks as one vehicle platoon by using the application server, and the application server formulates numbers for the vehicles included in the vehicle platoon. It should be understood that the application server may further store information such as a certificate of each vehicle in the vehicle platoon and an identifier of the vehicle. For example, the identifier of the vehicle may be a vehicle identification number (Vehicle Identification Number, VIN). The VIN may be allocated by a manufacturer to the vehicle. Each vehicle has a dedicated VIN.

It should be noted that the foregoing manner of establishing the vehicle platoon is merely an example, and should not constitute a limitation on establishing a vehicle platoon in this application. Any manner of establishing a vehicle platoon is applicable to this embodiment of this application.

Step 403: The application server sends the vehicle information of the vehicle platoon to the leading vehicle, and correspondingly, the leading vehicle receives the vehicle information of the vehicle platoon, where the vehicle information is sent by the application server.

The application server sends the vehicle information of the vehicle platoon to the leading vehicle. For example, the vehicle information of the vehicle platoon includes but is not limited to a vehicle identifier and a vehicle number of any vehicle in the vehicle platoon. For example, for the vehicle platoon shown in FIG. 2, the vehicle information sent by the application server to the leading vehicle may be vehicle identifiers (VIN_1, VIN_2, VIN_3, VIN 4) and vehicle numbers (1, 2, 3, 4), where the vehicle identifiers and the vehicle numbers are in a one-to-one correspondence in an arrangement order. The vehicle information represents that a vehicle number of a vehicle whose vehicle identifier is VIN_1 is 1, a vehicle number of a vehicle whose vehicle identifier is VIN 2 is 2, and the rest may be deduced by analogy. For another example, the vehicle information sent by the application server to the leading vehicle may be group information of a vehicle identifier and a vehicle number, for example, (VIN_1, 1), (VIN_2, 2), (VIN_3, 3), and (VIN_4, 4).

It should be noted that the foregoing vehicle numbers are merely examples, and a specific value of the vehicle number is not limited in this application. In this embodiment of this application, numbers of the vehicles included in the vehicle platoon are consecutive integers, and any vehicle in the vehicle platoon has a different number. For example, numbers of the vehicles in the vehicle platoon shown in FIG. 2 may alternatively be (2, 3, 4, 5), or (10, 11, 12, 13).

Alternatively, step 403 may be actively initiated by the application server. For example, when the vehicle administrator configures the vehicle platoon by using the application server, the application server actively sends the vehicle information of the vehicle platoon to the leading vehicle, to indicate the leading vehicle to establish the vehicle platoon including vehicles that are indicated by the application server. The leading vehicle herein may be a vehicle with any number in the vehicle platoon or a vehicle at any traveling location.

Step 404: The leading vehicle performs, with a group member vehicle based on the vehicle information of the vehicle platoon, a group key negotiation process with message authentication.

The group member vehicle refers to any vehicle in the vehicle platoon other than the leading vehicle.

Specifically, the group key negotiation process may be obtained by performing a series of operations based on a preset algorithm. For example, each vehicle in the vehicle platoon completes one or more rounds of negotiation, to generate the group key. For example, vehicles in the vehicle platoon generate first-round negotiation parameters based on the preset algorithm, and the vehicles in the vehicle platoon perform interaction on the first-round negotiation parameters. The vehicles generate second-round negotiation parameters based on the preset algorithm and the first-round negotiation parameters, and the vehicles in the vehicle platoon perform interaction on the second-round negotiation parameters. Each vehicle generates a group key based on a second-round negotiation parameter obtained by the vehicle.

The preset algorithm used to calculate the group key is not limited in this embodiment of this application. For ease of description, the following describes a group key negotiation process in this embodiment of this application by using the Burmester-Desmedt group key exchange protocol (BD protocol for short) as an example.

Exemplarily, the BD protocol-based group key negotiation process may include the following steps.

Step 1: Any vehicle in the vehicle platoon generates a random number ri, where i=1, 2, 3, ... 2, and (1, 2, 3, ..., n) are vehicle numbers of all member vehicles in the vehicle platoon. The random number ri represents a random number generated by a vehicle whose vehicle number is i, and a first-round negotiation parameter yi is generated and broadcast based on the random number ri. The first-round negotiation parameter yi meets the following formula 1.

In formula 1, $y_i = g^{ri}$ mod p.

In the formula, g and p are public parameters. The public parameters may be configured by the application server in step 401.

Step 2: A vehicle receives a broadcast message of another vehicle, generates a second-round negotiation parameter Xi by using first-round negotiation parameters of vehicles whose numbers are adjacent to a vehicle number of the vehicle, and broadcasts the second-round negotiation parameter Xi. The second-round negotiation parameter Xi meets the following formula 2.

In formula 2, $X_i' = (y_{i+1} \div y_{i-1})^{ri}$ mod p .

In the formula, i+1 and i-1 are vehicle numbers adjacent to i. It should be noted that the adjacent numbers refer to adjacent numbers obtained after the numbers are arranged in a sequence in a head-to-tail connection manner, where the adjacent numbers of i are (i+1) and (i-1). The numbers (1, 2, 3, 4) of vehicles included in the vehicle platoon shown in FIG. 2 are used as examples. Adjacent numbers of the number 1 are 2 and 4, adjacent numbers of the number 2 are 3 and 1, adjacent numbers of the number 3 are 4 and 2, and adjacent numbers of the number 4 are 1 and 3.

A first-round broadcast message of a vehicle in the vehicle platoon includes yi generated based on the foregoing step 1, a number of the vehicle in the vehicle platoon, and a certificate of the vehicle. The number is used to indicate, to another vehicle in the vehicle platoon, a vehicle that sends the broadcast message. When receiving a first-round broadcast message from still another vehicle in the vehicle platoon, the another vehicle needs to perform verification on a certificate of the vehicle. After the verification succeeds, the another vehicle continues to perform a subsequent group key negotiation process. When the verification fails, the another vehicle discards the broadcast message and exits the group key negotiation process. For a second-round broadcast, a process that is the same as that of the first-round broadcast is performed. Details are not described herein again.

Optionally, when sending a broadcast message, a vehicle may further perform a signature operation on negotiation parameters (a first-round negotiation parameter and a second-round negotiation parameter) by using a private key of the vehicle, and then encapsulate the negotiation parameters into the broadcast message. After a broadcast message of another vehicle in the vehicle platoon is received, and after certificate verification of the another vehicle succeeds, verification is performed on the signature data. After the verification of the signature data succeeds, a subsequent group key negotiation process continues to be performed. When the certificate verification or the verification of the signature data fails, the broadcast message is discarded, the group key negotiation process is exited. In this way, security and reliability of communication between vehicle platoon members are improved.

It should be noted that the foregoing group key negotiation process is merely an example. A vehicle in the vehicle platoon may broadcast a negotiation message, or a group member vehicle may send a negotiation parameter to a same specified terminal device, for example, a leading vehicle. The leading vehicle receives a negotiation message of each group member vehicle in the vehicle platoon, packs negotiation messages of all vehicles in the vehicle platoon, and sends packed messages to each group member vehicle in the vehicle platoon. The group member vehicle receives the messages sent by the leading vehicle, and obtains negotiation parameters of other vehicles by using the messages.

Step 405: The leading vehicle and the group member vehicle complete the group key negotiation process, and separately generate a group key.

For example, any vehicle in the vehicle platoon generates a group key by using the obtained second-round negotiation parameter. The group key meets the following formula 3.

In formula 3, $K_i = (y_{i-1})^{nri} \times (X_i')^{n-1} \times (X_{i+1}')^{n-2} \times ... (X_{i-2}')$ mod p; and

$$K_i = \mathrm{g}^{r_1 r_2 + r_2 r_3 + \cdots + r_n r_1}.$$

Step 406: Vehicles in the vehicle platoon perform secure communication with each other by using the group key.

It should be noted that in the foregoing steps, the process executed by the leading vehicle may alternatively be executed by an RSU. When the process is executed by the RSU, the RSU may establish, based on a coverage area of the RSU, vehicles within the coverage area as a vehicle platoon. For details, refer to the foregoing related descriptions. Details are not described herein again.

The following describes a group key negotiation process in detail by using Embodiment 2 to Embodiment 4.

**[Embodiment 2] Broadcast**

In Embodiment 2, secure communication in Embodiment 2 of this application is specifically described by using the system architecture shown in FIG. 2 and an example in which vehicles in a vehicle platoon complete group key negotiation through two rounds of broadcast in a group key negotiation process.

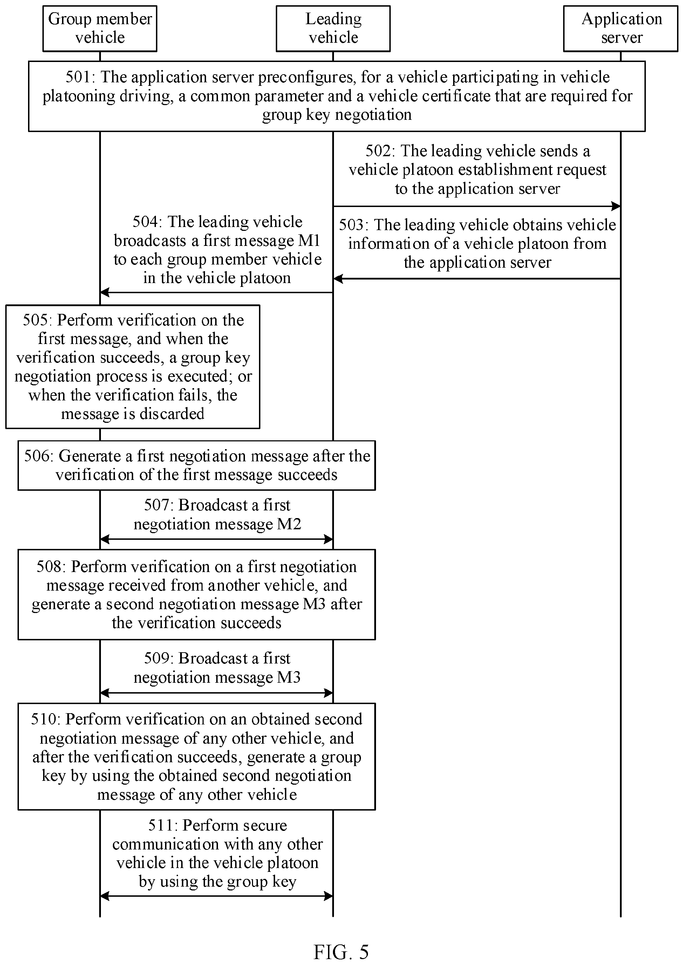

FIG. 5 is a schematic flowchart corresponding to a secure communication method according to an embodiment of this application. Step 501 to step 503 are the same as execution steps of step 401 to step 403 in FIG. 4, and details are not described herein again. The following describes only a difference.

Step 504: The leading vehicle broadcasts a first message to each member vehicle in the vehicle platoon, and correspondingly, each member vehicle in the vehicle platoon receives the first message broadcast by the leading vehicle.

Specifically, the first message includes but is not limited to a preset negotiation request field, vehicle information of the vehicle platoon, third signature data, or a certificate of the leading vehicle.

The preset negotiation request field is used to: indicate a type of the first message, and trigger a vehicle in the vehicle platoon to perform a group key negotiation process after the vehicle joins the vehicle platoon. The third signature data is obtained after a signature operation is performed on a third digital digest by using a private key of the leading vehicle, where the third digital digest is obtained after the leading vehicle performs a digest operation on the preset negotiation request field and the vehicle information of the vehicle platoon based on a preset digest algorithm. The digest algorithm and a signature algorithm may be international standard algorithms. The digest algorithm and the signature algorithm are not limited in this embodiment of this application. The following lists several examples. The digest algorithm may be a Hash algorithm (for example, SHA-256), an SM3, or the like. The signature algorithm may be an ECDSA or an SM2-based signature algorithm

For example, the first message (represented by M1) is:

$$M1 = \mathrm{Auth\_GKA\_req} \| (\mathrm{IDi, Ui}) \| \mathrm{Sign}\{\mathrm{hash}[(\mathrm{Auth\_GKA\_req} \| (\mathrm{IDi, Ui}))]\} \| \mathrm{Lcert}$$

In the algorithm, ∥ indicates a hyphen, and is used for connecting message fields, to form a new message;

Auth_GKA req is a negotiation request field, and may be a preset character string, for example, 01011011;
(IDi, Ui) represents group information of a vehicle identifier Idi of any vehicle i in the vehicle platoon and a number Ui of the vehicle i in the vehicle platoon, and FIG. 2 is used as an example in which (IDi, Ui) includes (ID1, U1), (ID2, U2), (ID3, U3), and (ID4, U4);
Sign indicates that a signature operation is performed on a message based on a preset signature algorithm, to obtain signature data; and
Hash indicates that a digest operation is performed on a message based on a preset digest algorithm, to obtain a digital digest.

Specifically, hash[(Auth_GKA_req∥(IDi,Ui)] indicates a first digital digest obtained through performing encryption on the [(Auth_GKA_req∥(IDi,Ui)] by using the hash algorithm; and Sign{hash[(Auth_GKA_req∥(IDi,Ui))]} indicates that a signature operation is performed on the first digital digest by using a private key of the leading vehicle. Both the signature operation and the digest operation may be understood as operations for performing encryption by using corresponding encryption algorithms.

Lcert indicates a certificate of a vehicle, and is the certificate of the leading vehicle herein.

Step 505: After receiving the first message broadcast by the leading vehicle, each member vehicle in the vehicle platoon performs verification on the first message.

The group member vehicle determines, based on the preset negotiation request field, that the first message is a group key negotiation request message initiated by the leading vehicle, joins the vehicle platoon based on the first message, and enters a group key negotiation process.

After receiving the first message, each group member vehicle separately performs verification on the first message. When the verification succeeds, the group key negotiation process is executed. When the verification fails, the message is discarded, and the group key negotiation process is exited.

For example, in FIG. 2, it is assumed that a number of the leading vehicle is 1, and numbers of other group member vehicles are respectively 2, 3, and 4. For ease of description, the leading vehicle is referred to as a vehicle 1 for short below, and the other group member vehicles are referred to as a vehicle 2, a vehicle 3, and a vehicle 4 for short. A process of step 504 and step 505 may be described as follows: The vehicle 1 broadcasts a first message, and the vehicle 2, the vehicle 3, and the vehicle 4 separately receive the first message broadcast by the vehicle 1. The vehicle 2, the vehicle 3, and the vehicle 4 separately perform verification on the first message. The following uses a group member vehicle (the vehicle 2) as an example to describe a process in which the vehicle 2 performs verification on the first message (M1). Specifically, the process in which the vehicle 2 performs verification on M1 includes the following steps.

Step 1: Perform verification on a certificate that is of the leading vehicle and that is included in M1.

First, a certificate of a vehicle is described as follows.

A vehicle certificate authority configures a public-private key pair of the vehicle for the vehicle, where a public key can perform decryption on data signed by using a private key. The vehicle certificate authority notifies the vehicle of the private key in a confidential manner. The public key is carried in a certificate issued by the vehicle certificate authority to the vehicle. For example, the certificate of the vehicle includes three parts: identity information of the vehicle, a public key allocated by a certificate authority to the vehicle, and data obtained after the certificate authority performs a digest operation and a signature operation on the first two parts of messages by using a private key of the certificate authority. As shown in the following Table 1, for ease of description, Table 1 shows a certificate structure by using a certificate of a leading vehicle as an example.

Table 1

| Part 1 | Part 2 | Part 3 |
|---|---|---|
| Identity information (ID) of a leading vehicle | A public key (Public Key) of the leading vehicle | Sigh{hash(ID ‖Public Key)} |

It should be understood that a public key of the vehicle certificate authority is publicly shared data, and any vehicle may obtain and store the public key, to perform verification on a certificate of another vehicle.

For example, the vehicle 2 performs decryption on the third part of the certificate by using the public key of the vehicle certificate authority. When the decryption fails, verification of the certificate fails. When the decryption succeeds, a digital digest 1 ({hash(ID ‖ public key)}) is obtained. In addition, the vehicle 2 performs a digest operation on the first part and the second part of the certificate based on a preset digest algorithm, to obtain a digital digest 2. When the digital digest 1 is consistent with the digital digest 2, verification of the certificate succeeds; or when the digital digest 1 is inconsistent with the digital digest 2, verification of the certificate fails, and the vehicle 2 discards the first message, and does not participate in a group key negotiation process.

Step 2: After the verification of the certificate succeeds, perform verification on third signature data.

After the verification of the certificate succeeds, the vehicle 2 obtains the public key (public key) that is of the leading vehicle and that is included in the certificate, and performs decryption on the third signature data by using the public key of the leading vehicle. When the decryption fails, verification of the third signature data fails. When the decryption succeeds, a digital digest 3, that is, hash[(Auth_GKA_req‖(IDi,Ui)), is obtained. Then, a digest operation is performed, based on the preset digest algorithm, on the Auth_GKA_req‖(IDi,Ui) included in M1, to obtain a digital digest 4. When the digital digest 3 is consistent with the digital digest 4, verification of the first message succeeds; or when the digital digest 3 is inconsistent with the digital digest 4, the vehicle 2 discards the first message, and does not participate in the group key negotiation process.

After the verification of the first message succeeds, each member vehicle in the vehicle platoon matches, based on (IDi, Ui) included in the first message, a number Ui corresponding to a vehicle identifier IDi of the member vehicle. The vehicle may continue to execute a subsequent group key negotiation process based on the obtained number. The vehicle identifier IDi may be a vehicle VIN allocated to the vehicle when the vehicle is delivered from a factory, and the vehicle identifier is known to the vehicle.

Step 506: Each vehicle (including the leading vehicle) in the vehicle platoon generates a first negotiation parameter.

The following uses the BD protocol as an example to describe a process in which a group member vehicle generates a first negotiation parameter. The process may include the following steps.

(1) A vehicle i randomly generates a random number ri, where i is an integer greater than 0 and less than n, where 1, 2, ..., and n are numbers of vehicles in the vehicle platoon. For example, the vehicle 1 generates a random number r1 based on a random function, the vehicle 2 randomly generates a random number r2, the vehicle 3 randomly generates a random number r3, and the vehicle 4 randomly generates a random number r4.

(2) The vehicle i performs an operation based on a first preset algorithm and the random number ri of the vehicle i, to obtain a first negotiation parameter (represented by yi). It is assumed that the first preset algorithm is the foregoing formula 1.

(3) The vehicle i performs a signature operation on the first negotiation parameter yi and the number of the vehicle i in the vehicle platoon by using a private key of the vehicle i, to obtain first signature data (referred to as a manner 1). Optionally, the vehicle i may further obtain the first signature data in the following manner. For example, the vehicle i performs a signature operation on the first negotiation parameter, an identifier of the vehicle i, and the number of the vehicle i in the vehicle platoon by using the private key of the vehicle i, to obtain the first signature data (referred to as a manner 2). The following uses the manner 2 as an example for description.

The vehicle i generates the first signature data (represented by Ni). For example, Ni= Sigh{hash(yi ||IDi ||Ui)}, and Ni is encapsulated, to obtain a first negotiation message (represented by Mi). For example, Mi= yi ||IDi ||Ui|| Ni|| Lcert (Ui).

Each vehicle in the vehicle platoon generates the first negotiation parameter yi and the first negotiation message Mi that are of the vehicle in the foregoing manner, where i identifies the vehicle i.

In a possible case, when at least two vehicles in the vehicle platoon generate a same random number, the at least two vehicles also generate a same first negotiation parameter yi.

Step 507: Each vehicle in the vehicle platoon broadcasts the first negotiation message generated by the vehicle, and receives a first negotiation message broadcast by any other vehicle in the vehicle platoon.

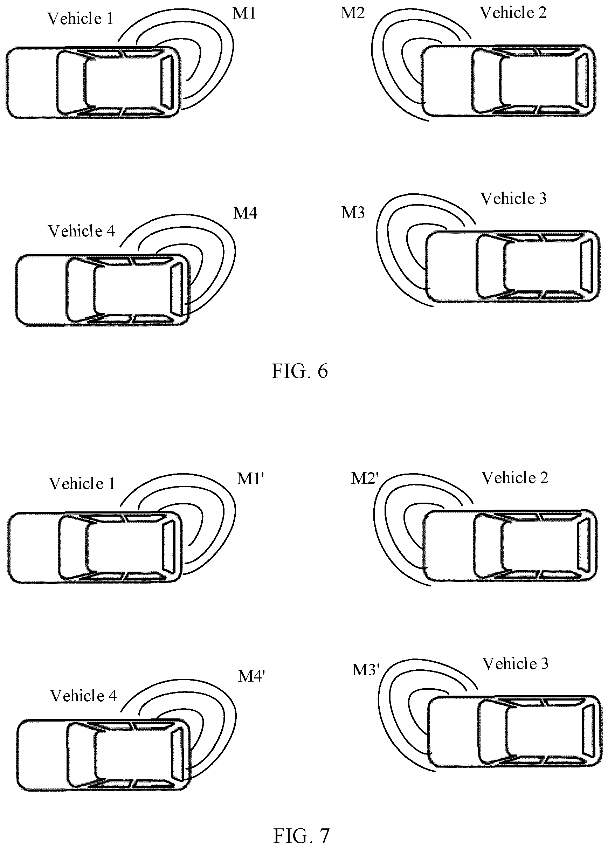

FIG. 6 is a schematic diagram of an interaction scenario in which a vehicle platoon performs a first-round broadcast. Messages broadcast in the first-round broadcast are first negotiation messages generated by all vehicles.

For ease of differentiation, a first negotiation message generated by a vehicle 1 is represented by M1, a first negotiation message generated by a vehicle 2 is represented by M2, a first negotiation message generated by a vehicle 3 is represented by M3, and a first negotiation message generated by a vehicle 4 is represented by M4. In FIG. 6, the first-round broadcast of the vehicle platoon includes the following: The vehicle 1 broadcasts M1, and receives M2, M3, and M4; the vehicle 2 broadcasts M2, and receives M1, M3, and M4; the vehicle 3 broadcasts M3, and receives M1, M2, and M4; and the vehicle 4 broadcasts M4, and receives M1, M2, and M3.

Step 508: Each vehicle in the vehicle platoon performs verification on first negotiation messages received from other vehicles, and generates a second negotiation parameter after the verification succeeds.

The following describes a process of performing verification on a first negotiation message by using an example in which one group member vehicle (the vehicle 2) performs verification on a first negotiation message of another group member vehicle (the vehicle 1). The process may include the following steps.

(1) The vehicle 2 performs verification on a certificate that is of the vehicle 1 and that is included in the first negotiation message. For a verification manner of the certificate, refer to the specific descriptions of the foregoing step 505. Details are not described herein again.

(2) After the certificate verification of the vehicle 1 succeeds, verification is performed on first signature data included in the first negotiation message. For a verification manner of the first signature data, refer to the specific descriptions of the foregoing step 505. Details are not described herein again.

After the verification of the first negotiation message succeeds, each vehicle in the vehicle platoon generates a second negotiation parameter based on first negotiation parameters of vehicles whose numbers are adjacent to a number of the vehicle in the vehicle platoon.

The following describes, still based on the BD protocol, a process in which a group member vehicle generates a first negotiation parameter. The process may include the following steps.

(1) The vehicle i performs an operation based on a second preset algorithm and the random number ri of the vehicle i, to obtain a second negotiation parameter Xi. It is assumed that the second preset algorithm is the foregoing formula 2.

(2) The vehicle i performs a signature operation on the second negotiation parameter Xi and the number of the vehicle i in the vehicle platoon by using a private key of the vehicle i, to obtain second signature data (referred to as a manner 1). Optionally, the vehicle i may further obtain the second signature data in the following manner. For example, the vehicle i performs a signature operation on the second negotiation parameter Xi, the identifier IDi of the vehicle i, and the number Ui of the vehicle i in the vehicle platoon by using the private key of the vehicle i, to obtain the second signature data (referred to as a manner 2). The following uses the manner 2 as an example for description.

The vehicle i generates the second signature data (represented by Ni'). For example, Ni'= Sigh{hash(Xi||Di ||Ui)}, and Ni' is encapsulated, to obtain a second negotiation message (represented by Mi'). For example, Mi'= Xi ||IDi ||Ui|| Ni'||Ui|| Lcert(Ui).

Each vehicle in the vehicle platoon generates the second negotiation parameter Xi and the second negotiation message Mi' that are of the vehicle in the foregoing manner.

Optionally, if in step 506, each vehicle stores a certificate of any other vehicle after receiving a first negotiation message of any other vehicle in the vehicle platoon, in step 507, the second negotiation message generated by each vehicle may not carry the certificate. If each vehicle does not store a certificate of another vehicle after receiving a first negotiation message of the another vehicle in the vehicle platoon, the second negotiation message generated by each vehicle needs to carry the certificate of the vehicle.

Step 509: Each vehicle in the vehicle platoon broadcasts the second negotiation message generated by the vehicle, and receives a second negotiation message broadcast by any other vehicle in the vehicle platoon.

FIG. 7 is a schematic diagram of an interaction scenario in which a vehicle platoon performs a second-round broadcast. Messages broadcast in the second-round broadcast are second negotiation messages generated by all vehicles.

For ease of differentiation, a second negotiation message generated by the vehicle 1 is represented by M1', a second negotiation message generated by the vehicle 2 is represented by M2', a second negotiation message generated by the vehicle 3 is represented by M3', and a second negotiation message generated by the vehicle 4 is represented by M4'. In FIG. 7, the second-round broadcast of the vehicle platoon includes the following: The vehicle 1 broadcasts M1', and receives M2', M3', and M4'; the vehicle 2 broadcasts M2', and receives M1', M3', and M4'; the vehicle 3 broadcasts M3', and receives M1', M2', and M4'; and the vehicle 4 broadcasts M4', and receives M1', M2', and M4'.

Step 510: Each vehicle in the vehicle platoon performs verification on an obtained second negotiation message of any other vehicle, and after the verification succeeds, generates a group key by using the obtained second negotiation message of any other vehicle.

The following describes a process of performing verification on a second negotiation message by using an example in which one group member vehicle (the vehicle 2) performs verification on a second negotiation message of another group member vehicle (the vehicle 1). The process may include the following steps.

(1) The vehicle 2 performs verification on a certificate that is of the vehicle 1 and that is included in the second negotiation message. For a verification manner of the certificate, refer to the specific descriptions of the foregoing step 506. Details are not described herein again.

Optionally, in step 506, the vehicle 2 has performed verification on certificates of vehicles (the vehicle 1 and the vehicle 3) whose numbers are adjacent the number of vehicle 2. In this case, in step 511, the vehicle 2 may perform repeated verification on the certificates of the vehicle 1 and the vehicle 3. Alternatively, the vehicle 2 may not perform repeated verification on the certificates of the vehicle 1 and the vehicle 3. This is not limited in this embodiment of this application.

(2) After the certificate verification of the vehicle 1 succeeds, verification is performed on second signature data included in the second negotiation message. For a verification manner of the second signature data, refer to the specific descriptions of the foregoing step 506. Details are not described herein again.

After the verification of the second negotiation message succeeds, each vehicle in the vehicle platoon generates a group key based on an obtained second negotiation parameter of another vehicle in the vehicle platoon.

The following describes, still based on the BD protocol, a process in which each vehicle in the vehicle platoon generates a group key. The process may include that the vehicle i performs an operation based on a third preset algorithm and the random number ri of the vehicle i to obtain the group key. It is assumed that the third preset algorithm is the foregoing formula 3.

Step 511: The vehicle in the vehicle platoon performs secure communication with any other vehicle in the vehicle platoon by using the group key.

It should be noted that in the foregoing process steps, an operation performed by the leading vehicle may alternatively be performed by an RSU. Similarly, the RSU has a number in a vehicle platoon. For example, the vehicle platoon includes the RSU, the vehicle 2, the vehicle 3, and the vehicle 4. A number of the RSU is 1, a number of the vehicle 2 is 2, a number of the vehicle 3 is 3, and a number of the vehicle 4 is 4. The RSU performs the foregoing operation steps performed by the leading vehicle. In other words, the RSU participates in the calculation and the broadcast in the group key negotiation process. For details, refer to the steps performed by the leading vehicle in the process shown in FIG. 5. Details are not described herein again.

**[Embodiment 3] Unicast**

In Embodiment 3, secure communication in this embodiment of this application is specifically described by using the system architecture shown in FIG. 2 and an example in which vehicles in a vehicle platoon complete group key negotiation through two rounds of unicast in a group key negotiation process.

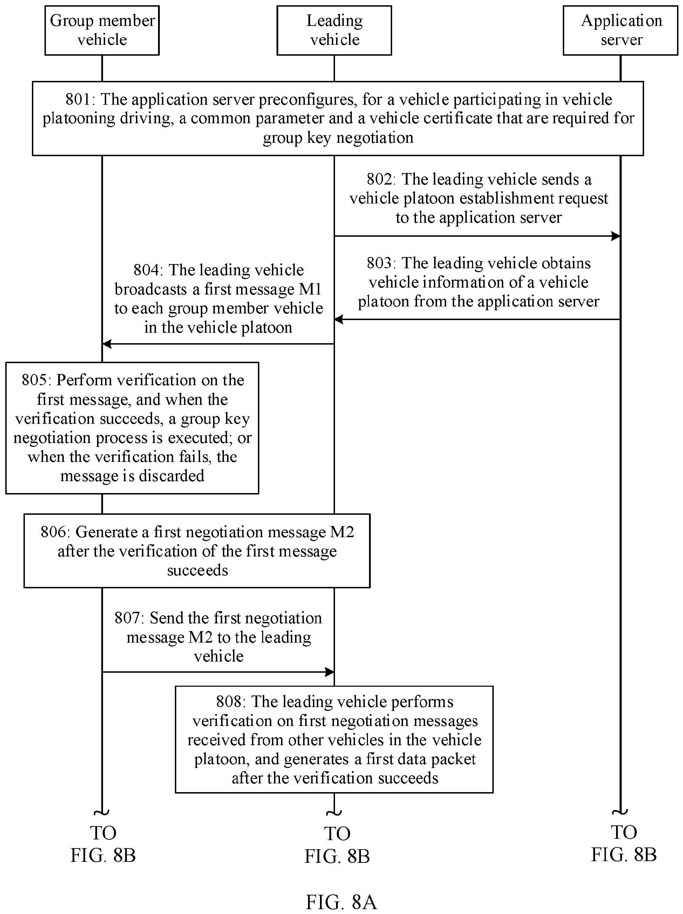

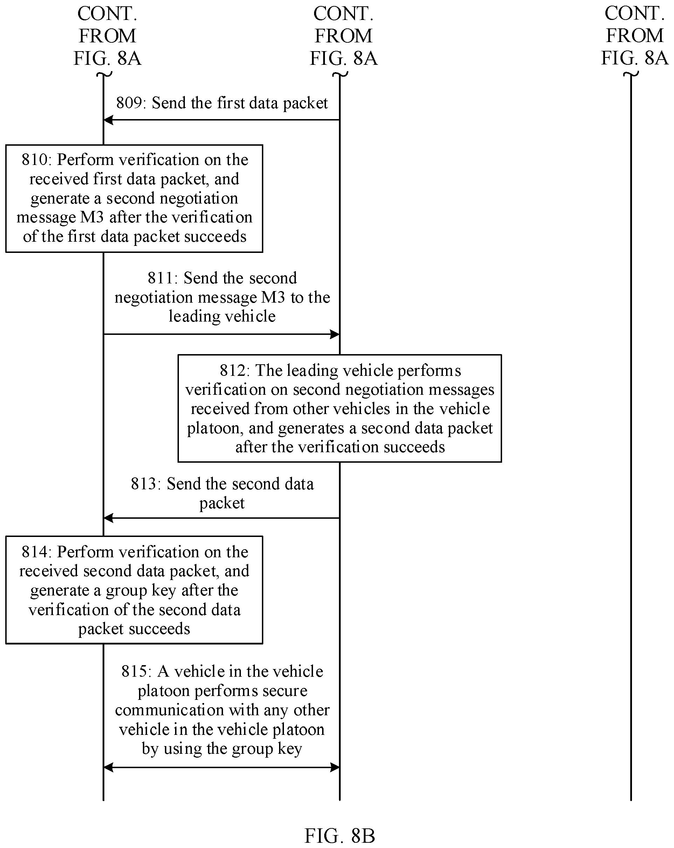

FIG. 8A and FIG. 8B are a schematic flowchart corresponding to a secure communication method according to an embodiment of this application. Step 801 to step 806 and step 815 are the same as execution steps of step 501 to step 506 and step 511 in FIG. 5, and details are not described herein again. The following describes only a difference.

Step 807: Vehicles in a vehicle platoon send, to a same specified terminal device, first negotiation messages respectively generated by the vehicles.

It should be understood that the specified terminal device is a vehicle in the vehicle platoon. For example, the specified terminal device may be a leading vehicle, a vehicle with a specified number, or a vehicle at a specified driving location. This is not limited in this embodiment of this application.

The following specifically describes step 807 by using an example in which the specified terminal device is the leading vehicle.

Group member vehicles in the vehicle platoon send, to the leading vehicle, first negotiation parameters respectively generated by the group member vehicles. For example, in FIG. 2, the vehicle 1 is the leading vehicle. The vehicle 1, the vehicle 2, the vehicle 3, and the vehicle 4 respectively generate first negotiation messages in step 806. In step 807, the vehicle 2 sends, in a unicast (point-to-point) manner, the first negotiation message generated by the vehicle 2 to the vehicle 1. Similarly, the vehicle 3 sends, in a unicast (point-to-point) manner, the first negotiation message generated by the vehicle 3 to the vehicle 1, and the vehicle 4 sends, in a unicast (point-to-point) manner, the first negotiation message generated by the vehicle 4 to the vehicle 1.

Step 808: The specified terminal device performs verification on the first negotiation messages received from other vehicles in the vehicle platoon, and generates a first data packet after the verification succeeds, where the first data packet includes first negotiation parameters of all vehicles in the vehicle platoon.

As shown above, an example in which the specified terminal device is the leading vehicle is used. After receiving the first negotiation messages corresponding to the vehicle 2, the vehicle 3, and the vehicle 4, the leading vehicle separately performs verification on the first negotiation messages of the group member vehicles. A verification process includes the following steps: Verification is performed on a certificate of each vehicle; and after the verification of the certificate succeeds, verification is performed on first signature data in the first negotiation message. For a specific verification manner, refer to the verification steps in step 505. Details are not described herein again.

After the verification of the first negotiation message succeeds, the leading vehicle obtains a first negotiation parameter (yi) in the first negotiation message of each vehicle, and packs the first negotiation parameters of all the vehicles in the vehicle platoon, to generate a first data packet. For example (Example 1), the first data packet includes the first negotiation parameter of each vehicle and a number of the vehicle in the vehicle platoon. For example, the first data packet includes (the first negotiation parameter of the vehicle 1, 1), (the first negotiation parameter of the vehicle 2, 2), (the first negotiation parameter of the vehicle 3, 3), and (the first negotiation parameter of the vehicle 4, 4). For another example (Example 2), the first negotiation parameters in the first data packet are arranged based on numbers of the vehicles in the vehicle platoon. For example, the first data packet includes the first negotiation parameter of the vehicle 1, the first negotiation parameter of the vehicle 2, the first negotiation parameter of the vehicle 3, and the first negotiation parameter of the vehicle 4. The following uses example 2 as an example to describe a subsequent process.

It should be noted that, because the specified terminal device does not need to send the first negotiation message of the specified terminal device, the specified terminal device may generate only the first negotiation parameter in step 806. In addition, when the verification of the first negotiation message of any vehicle fails, the specified terminal device discards the message, and exits the group key negotiation process.

For example, a packaging process of the first data packet includes the following: A digest operation is performed, based on a preset digest algorithm, on the first negotiation parameter yi of each vehicle that is arranged based on a number in the vehicle platoon, to obtain a corresponding digital digest; the specified terminal device performs a signature operation on the digital digest by using a private key of the terminal device, to obtain corresponding signature data 1; and the specified terminal device encapsulates the first negotiation parameters and the signature data 1 of all vehicles that are arranged based on the numbers in the vehicle platoon, to generate the first data packet. For example, for the first data packet (represented by data1), data1=y1∥y2∥y3∥y4∥sigh{hash(y1∥y2∥y3∥y4)}∥ Lcert (the specified terminal device). In this formula, y1 is the first negotiation parameter of the vehicle 1, y2 is the first negotiation parameter of the vehicle 2, y3 is the first negotiation parameter of the vehicle 3, and y4 is the first negotiation parameter of the vehicle 4.

Step 809: The specified terminal device sends the first data packet to any other vehicle in the vehicle platoon.

For example, the specified terminal device may broadcast the first data packet, and another vehicle in the corresponding vehicle platoon receives the first data packet broadcast by the specified terminal device. For another example, the specified terminal device may alternatively send the first data packet to each member vehicle in a unicast manner.

Step 810: Each vehicle in the vehicle platoon other than the specified terminal device receives the first data packet sent by the specified terminal device, performs verification on the first data packet, and generates a second negotiation message after the verification of the first data packet succeeds.

For example, in FIG. 2, the vehicle 1 broadcasts the first data packet; the vehicle 2, the vehicle 3, and the vehicle 4 separately receive the first data packet broadcast by the vehicle 1; and the vehicle 2, the vehicle 3, and the vehicle 4 separately perform verification on the received first data packet. The following uses one vehicle (vehicle 2) as an example to describe a process of performing verification on the first data packet. The process includes the following steps.

The vehicle 2 performs verification on the certificate of the vehicle 1, and performs verification on the signature data 1 after the certificate verification of the vehicle 1 succeeds. For a specific verification step, refer to the descriptions of step 505. Details are not described herein again.

After the verification of the first data packet succeeds, first negotiation parameters of vehicles whose numbers are adjacent to the number of the vehicle are obtained, to generate a second negotiation parameter and a second negotiation message. For a specific generation process, refer to the descriptions of step 508. Details are not described herein again.

Each vehicle in the vehicle platoon generates a second negotiation parameter and a second negotiation message that are of the vehicle in the foregoing manner. It should be noted that, because the leading vehicle does not need to send the second negotiation message of the leading vehicle, the leading vehicle may generate only the second negotiation parameter in step 810.

Step 811: The vehicles in the vehicle platoon send, to a same specified terminal device, the second negotiation messages respectively generated by the vehicles.

Step 812: The specified terminal device performs verification on the second negotiation messages received from other vehicles in the vehicle platoon, and generates a second data packet after the verification succeeds, where the second data packet includes second negotiation parameters of all vehicles in the vehicle platoon.

For a verification manner of the second negotiation message of each vehicle, refer to the specific descriptions of step 510. Details are not described herein again.

After verification of the second negotiation message of each vehicle succeeds, the leading vehicle obtains a second negotiation parameter (Xi) in the first negotiation message of each vehicle, and packs the second negotiation parameters of all the vehicles in the vehicle platoon, to generate a second data packet, where the first negotiation parameters in the second data packet are arranged based on numbers of the vehicles in the vehicle platoon. For example (Example 3), the second data packet includes the second negotiation parameter of each vehicle and a number of the vehicle in the vehicle platoon. For example, the first data packet includes (the second negotiation parameter of the vehicle 1, 1), (the second negotiation parameter of the vehicle 2, 2), (the second negotiation parameter of the vehicle 3, 3), and (the second negotiation parameter of the vehicle 4, 4). For another example (Example 4), the second negotiation parameters in the second data packet are arranged based on numbers of the vehicles in the vehicle platoon. For example, the first data packet includes the second negotiation parameter of the vehicle 1, the second negotiation parameter of the vehicle 2, the second negotiation parameter of the vehicle 3, and the second negotiation parameter of the vehicle 4. The following uses example 4 as an example to describe a subsequent process.

For example, a packaging process of the second data packet includes the following: A digest operation is performed, based on a preset digest algorithm, on the second negotiation parameter Xi of each vehicle that is arranged based on a number in the vehicle platoon, to obtain a corresponding digital digest; the specified terminal device performs a signature operation on the digital digest by using a private key of the terminal device, to obtain corresponding signature data 2; and the specified terminal device encapsulates the second negotiation parameters and the signature data 2 of all vehicles that are arranged based on the numbers in the vehicle platoon, to generate the second data packet. For example, for the second data packet (represented by data2), data2=$X1\|X2\|X3\|X4\|sigh\{hash(X1\|X2\|X3\|X4)\}\|$ Lcert (the specified terminal device).

Step 813: The specified terminal device sends the second data packet to any other vehicle in the vehicle platoon.

For example, the specified terminal device may broadcast the second data packet, and another vehicle in the corresponding vehicle platoon receives the second data packet broadcast by the specified terminal device. For another example, the specified terminal device may alternatively send the second data packet to each member vehicle in a unicast manner.

Step 814: Each vehicle in the vehicle platoon other than the specified terminal device receives the second data packet sent by the specified terminal device, performs verification on the second data packet, and generates a group key after the verification of the second data packet succeeds.

For an execution manner of step 814, refer to the execution step of performing verification on the first data packet by each vehicle in step 810. Details are not described herein again.

For a manner of generating the group key by each vehicle in the vehicle platoon, refer to the execution step in step 810. Details are not described herein again.

In an implementation, in the foregoing process steps, an operation performed by the specified terminal device may alternatively be performed by an RSU. Similarly, the RSU has a number in a vehicle platoon. For example, the vehicle platoon includes the RSU, the vehicle 2, the vehicle 3, and the vehicle 4. A number of the RSU is 1, a number of the vehicle 2 is 2, a number of the vehicle 3 is 3, and a number of the vehicle 4 is 4. The RSU performs the foregoing operation steps performed by the specified terminal device. For details, refer to the steps performed by the specified terminal device in the process shown in FIG. 8A and FIG. 8B. Details are not described herein again.

**[Embodiment 4] A case in which an RSU does not have a number in a vehicle platoon**

In an implementation, when the RSU is used as a specified terminal device, the RSU may not have a number in the vehicle platoon. For example, the vehicle platoon includes the RSU, a vehicle 2, a vehicle 3, and a vehicle 4. A number of the vehicle 2 is 1, a number of the vehicle 3 is 2, and a number of the vehicle 4 is 3. Numbers of the vehicle platoon are merely examples, and are not limited to numbers starting from 1. The numbers in this embodiment of this application are consecutive and non-repeated positive integers. For example, a number of the vehicle 2 is 3, a number of the vehicle 3 is 4, and a number of the vehicle 4 is 5. This is not limited in this embodiment of this application.

When the RSU is used as a specified terminal device, the RSU performs the foregoing operation steps performed by the specified terminal device. A difference lies in that when the RSU does not have a number in the vehicle platoon, the RSU does not participate in a process for calculating a first negotiation parameter and a second negotiation parameter, and is only used to perform summarization and forwarding operations for vehicles in the vehicle platoon. In other words, the RSU receives a first negotiation message and a second negotiation message of each vehicle in the vehicle platoon, generates a first data packet and a second data packet, and sends the first data packet and the second data packet.

In the foregoing embodiments provided in this application, the methods provided in embodiments of this application are separately described from a perspective of interaction between devices. To implement functions in the methods provided in the foregoing embodiments of this application, the first terminal, the second terminal, and the network device may include a hardware structure and/or a software module, and implement the foregoing functions in a form of the hardware structure, the software module, or a combination of the hardware structure and the software module. Whether a specific function in the foregoing functions is performed by the hardware structure, the software module, or the combination of the hardware structure and the software module depends on specific applications and design constraints of the technical solutions.

In embodiments of this application, module division is an example, and is merely a logical function division. In an actual implementation, another division manner may be used. In addition, functional modules in embodiments of this application may be integrated into one processor, or may exist alone physically, or two or more modules are integrated into one module. The integrated module may be implemented in a form of hardware, or may be implemented in a form of a software function module.

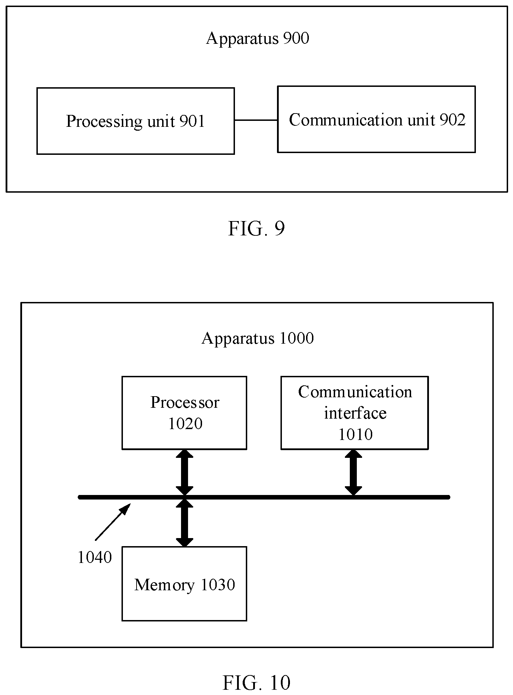

Same as the foregoing concept, as shown in FIG. 9, an embodiment of this application further provides an apparatus 900, configured to implement a function of the first vehicle or the first terminal device in the foregoing method. For example, the apparatus may be a software module or a chip system. In this embodiment of this application, the chip system may include a chip, or may include a chip and another discrete component. The apparatus 900 may include a processing unit 901 and a communication unit 902.

In this embodiment of this application, the communication unit may alternatively be referred to as a transceiver unit, and may include a sending unit and/or a receiving unit. The sending unit and the receiving unit are respectively configured to perform the sending and receiving steps performed by the first vehicle, the first terminal device, or the application server in the foregoing method embodiments.

Communication apparatuses provided in this embodiment of this application are described in detail with reference to FIG. 9 and FIG. 10. It should be understood that descriptions of apparatus embodiments correspond to the descriptions of the method embodiments. Therefore, for content that is not described in detail, refer to the foregoing method embodiments. For brevity, details are not described herein again.

In a possible design, the apparatus 900 may implement steps or processes corresponding to the steps or processes performed by the first vehicle or the first terminal device in the foregoing method embodiments. The following separately provides descriptions.

For example, when the apparatus 900 implements the function of the first vehicle in the foregoing process,

a communication unit 902 is configured to: receive a first message from a first terminal device, where the first message is used to indicate a number of the first vehicle in a vehicle platoon; send a first negotiation message, where the first negotiation message includes a first negotiation parameter of the first vehicle, the number of the first vehicle in the vehicle platoon, and a certificate of the first vehicle; and receive a first negotiation message from a second vehicle, where the second vehicle is any other vehicle in the vehicle platoon other than the first vehicle, and the first negotiation message of the second vehicle includes a first negotiation parameter of the second vehicle, a number of the second vehicle in the vehicle platoon, and a certificate of the second vehicle;

a processing unit 901 is configured to: after certificate verification of vehicles whose numbers are adjacent to the number of the first vehicle in the vehicle platoon succeeds, determine a second negotiation parameter based on first negotiation parameters of the vehicles whose numbers are adjacent to the number of the first vehicle in the vehicle platoon;

the communication unit 902 is further configured to: send a second negotiation message, where the second negotiation message includes the second negotiation parameter, the number of the first vehicle in the vehicle platoon, and the certificate of the first vehicle; and receive a second negotiation message from the second vehicle, where the second negotiation message from the second vehicle includes a second negotiation parameter of the second vehicle, the number of the second vehicle in the vehicle platoon, and the certificate of the second vehicle; and

the processing unit 901 is further configured to: after certificate verification of the second vehicle succeeds, generate, based on a second negotiation parameter of each second vehicle, a group key for performing secure communication with any vehicle in the vehicle platoon.

In a possible implementation, the first negotiation message of the second vehicle further includes first signature data, where the first signature data is obtained through performing a signature operation by using the second negotiation parameter and the number of the second vehicle in the vehicle platoon.

In a possible implementation, the processing unit 901 is specifically configured to: after the certificate verification of the second vehicle succeeds, and verification of the first signature data succeeds, determine the second negotiation parameter based on the first negotiation parameters of the vehicles whose numbers are adjacent to the number of the first vehicle in the vehicle platoon.

In a possible implementation, the second negotiation message of the second vehicle further includes second signature data, where the second signature data is obtained through performing a signature operation by using the second negotiation parameter and the number of the second vehicle.

In a possible implementation, the processing unit 901 is specifically configured to: after the certificate verification of the second vehicle succeeds, and verification of the second signature data succeeds, generate a group key based on the second negotiation parameter of each second vehicle.

In a possible implementation, the first message includes a negotiation request field, vehicle information of the vehicle platoon, third signature data, and a certificate of the first device that sends the first message, where the negotiation request field is used to trigger a vehicle in the vehicle platoon to send a first negotiation message, the vehicle information of the vehicle platoon includes a vehicle identifier of each vehicle in the vehicle platoon and a number of the vehicle corresponding to the vehicle identifier in the vehicle platoon, the third signature data is obtained through encrypting a third digital digest by using a private key of the first terminal device, and the third digital digest is determined based on the preset digest algorithm by using the negotiation request field and the vehicle information of the vehicle platoon.

In a possible implementation, the certificate of the first terminal device includes a public key of the first terminal device; and the processing unit 901 is specifically configured to: after certificate verification of the first terminal device succeeds, and certificate verification of the third signature data succeeds, determine, based on the vehicle information of the vehicle platoon, the number corresponding to the vehicle identifier of the first vehicle.

In a possible implementation, the processing unit 901 is further configured to: by using a first random number generated by the processing unit 901, perform an operation based on a first preset algorithm, to obtain the first negotiation parameter.

In a possible implementation, the processing unit 901 is specifically configured to: by using the first random number generated by the processing unit 901 and the first negotiation parameter of the second vehicle, perform an operation based on a second preset algorithm, to obtain the second negotiation parameter.

In a possible implementation, the processing unit 901 is specifically configured to: by using the first random number generated by the processing unit 901, the second negotiation parameter of the second vehicle, and a second negotiation parameter of a second vehicle whose number is after the number of the first vehicle in the vehicle platoon, perform an operation based on a third preset algorithm, to obtain the group key.

In a possible implementation, the communication unit 902 is further configured to: before sending data to any vehicle in the vehicle platoon, encrypt, by using the group key, the data that needs to be exchanged, and sends the encrypted data to the target vehicle; and/or after receiving data from any vehicle in the vehicle platoon, decrypt, by the first vehicle, the received data by using the group key.

In a possible implementation, the communication apparatus is a first terminal device.

For example, when the apparatus 900 implements the function of the first terminal device in the foregoing process,

the communication unit 902 is configured to: obtain vehicle information of a vehicle platoon from an application server, where the vehicle information of the vehicle platoon includes a vehicle identifier of each vehicle in the vehicle platoon and a number of the vehicle corresponding to the vehicle identifier in the vehicle platoon; and send a first message to each vehicle in the vehicle platoon, where the first message includes a negotiation request field, the vehicle information of the vehicle platoon, third signature data, and a certificate of the first device that sends the first message, where the negotiation request field is used to trigger a vehicle in the vehicle platoon to send a first negotiation message, the vehicle information of the vehicle platoon includes a vehicle identifier of each vehicle in the vehicle platoon and a number of the vehicle corresponding to the vehicle identifier in the vehicle platoon, the third signature data is obtained through encrypting a third digital digest by using a private key of the first terminal device, and the third digital digest is determined based on the preset digest algorithm by using the negotiation request field and the vehicle information of the vehicle platoon.

In a possible implementation, the communication unit 902 is further configured to: receive a first negotiation message from any other vehicle in the vehicle platoon, and send a first data packet to any other vehicle in the vehicle platoon, where the first data packet includes a first negotiation message of any vehicle in the vehicle platoon; and/or receive a second negotiation message from any other vehicle in the vehicle platoon, and send a second data packet to any other vehicle in the vehicle platoon, where the second data packet includes a second negotiation message of any vehicle in the vehicle platoon.

In a possible implementation, the first terminal device is a vehicle with any number in the vehicle platoon, or the first terminal device is a roadside device RSU.

In a possible implementation, the communication apparatus is an application server.

For example, when the apparatus 900 implements the function of the application server in the foregoing process, the communication unit 902 sends vehicle information of a vehicle platoon to the first terminal device.

FIG. 10 shows an apparatus 1000 according to an embodiment of this application. The apparatus shown in FIG. 10 may be an implementation of a hardware circuit of the apparatus shown in FIG. 10. The communication apparatus may be applicable to the flowcharts shown in FIG. 3 to FIG. 5, and FIG. 8A and FIG. 8B, and perform the functions of the first vehicle, the first terminal device, or the application server in the foregoing method embodiments. For ease of description, FIG. 10 shows only main components of the communication apparatus.

The apparatus 1000 shown in FIG. 10 includes at least one processor 1020, configured to implement any one of the methods in FIG. 3 to FIG. 5, and FIG. 8A and FIG. 8B that are provided in embodiments of this application.

The apparatus 1000 may further include at least one memory 1030, configured to store program instructions and/or data. The memory 1030 is coupled to the processor 1020. The coupling in this embodiment of this application is an indirect coupling or a communication connection between apparatuses, units, or modules, may be in an electrical form, a mechanical form, or another form, and is used for information exchange between the apparatuses, the units, or the modules. The processor 1020 may cooperate with the memory 1030. The processor 1020 may execute the program instructions stored in the memory 1030. At least one of the at least one memory may be included in the processor.

In an implementation process, steps in the foregoing methods can be implemented by using a hardware integrated logical circuit in the processor, or by using instructions in a form of software. The steps of the methods disclosed with reference to embodiments of this application may be performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in this embodiment of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processing circuit (digital signal processor, DSP), an application-specific integrated circuit (application specific integrated circuit, ASIC), a field programmable gate array (field programmable gate array, FPGA), another programmable logic device, a discrete gate or transistor logic device, or a discrete hardware component. The processor may implement or perform the methods, the steps, and the logical block diagrams disclosed in embodiments of this application. The general-purpose processor may be a microprocessor, or the processor may be any conventional processor, or the like. The steps of the methods disclosed with reference to embodiments of this application may be performed by a hardware decoding processor, or may be performed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example rather than limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

The apparatus 1000 may further include a communication interface 1010, configured to communicate with another device through a transmission medium, so that an apparatus in the apparatus 1000 can communicate with the another device. In this embodiment of this application, the communication interface may be a transceiver, a circuit, a bus, a module, or a communication interface of another type. In this embodiment of this application, when the communication interface is the transceiver, the transceiver may include an independent receiver and an independent transmitter, or may be a transceiver integrated with a transceiver function or an interface circuit.

The apparatus 1000 may further include a communication line 1040. The communication interface 1010, the processor 1020, and the memory 1030 may be connected to each other through the communication line 1040. The communication line 1040 may be a peripheral component interconnect (peripheral component interconnect, PCI) bus, an extended industry standard architecture (extended industry standard architecture, EISA for short) bus, or the like. The communication line 1040 may be classified into an address bus, a data bus, a control bus, and the like. For ease of representation, only one thick line is used for representing the bus in FIG. 10, but this does not mean that there is only one bus or only one type of bus.

For example, when the apparatus 1000 implements the function of the first vehicle in the foregoing process,

the communication interface 1010 is configured to: receive a first message from a first terminal device, where the first message is used to indicate a number of the first vehicle in a vehicle platoon; send a first negotiation message, where the first negotiation message includes a first negotiation parameter of the first vehicle, the number of the first vehicle in the vehicle platoon, and a certificate of the first vehicle; and receive a first negotiation message from a second vehicle, where the second vehicle is any other vehicle in the vehicle platoon other than the first vehicle, and the first negotiation message of the second vehicle includes a first negotiation parameter of the second vehicle, a number of the second vehicle in the vehicle platoon, and a certificate of the second vehicle;
the processor 1020 is configured to: after certificate verification of vehicles whose numbers are adjacent to the number of the first vehicle in the vehicle platoon succeeds, determine a second negotiation parameter based on first negotiation parameters of the vehicles whose numbers are adjacent to the number of the first vehicle in the vehicle platoon;
the communication interface 1010 is further configured to: send a second negotiation message, where the second negotiation message includes the second negotiation parameter, the number of the first vehicle in the vehicle platoon, and the certificate of the first vehicle; and receive a second negotiation message from the second vehicle, where the second negotiation message from the second vehicle includes a second negotiation parameter of the second vehicle, the number of the second vehicle in the vehicle platoon, and the certificate of the second vehicle; and
the processor 1020 is further configured to: after certificate verification of the second vehicle succeeds, generate, based on a second negotiation parameter of each second vehicle, a group key for performing secure communication with any vehicle in the vehicle platoon.

For other methods performed by the processor 1020 and the communication interface 1010, refer to the descriptions in the method processes shown in FIG. 3 to FIG. 5, and FIG. 8A and FIG. 8B. Details are not described herein again.

It should be noted that, in embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, "at least one of a, b, or c" may indicate: a, b, c, a and b, a and c, b and c, or a, b, and c, where a, b, and c may be singular or plural. "A plurality of' means two or more than two.

The term "for example" in embodiments of this application is used to represent giving an example, an illustration, or a description. Any embodiment or design scheme described as an "example" in this application should not be explained as being more preferred or having more advantages than another embodiment or design scheme. Specifically, the term "example" is used for presenting a concept in a specific manner.

Optionally, ordinal numbers such as "first" and "second" mentioned in embodiments of this application may be used to distinguish between a plurality of objects, but are not used to limit a sequence, a time sequence, priorities, or importance of the plurality of objects. For example, first information and second information are merely intended to distinguish between different signaling, but do not indicate that the two types of information are different in content, priorities, a sending sequence, importance, or the like.

In embodiments of this application, the memory may be a nonvolatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can be configured to carry or store expected program code in a form of instructions or a data structure and that can be accessed by a computer, but is not limited thereto. The memory in embodiments of this application may alternatively be a circuit or any other apparatus that can implement a storage function, and is configured to store program instructions and/or the data.

All or some of the methods in embodiments of this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD for short)), a semiconductor medium (for example, an SSD), or the like.

In embodiments of this application, on the premise that there is no logical conflict, embodiments may be mutually referenced. For example, methods and/or terms in the method embodiments may be mutually referenced, functions and/or terms in the apparatus embodiments may be mutually referenced, and functions and/or terms in the apparatus embodiments and the method embodiments may be mutually referenced.

A person skilled in the art can make various modifications and variations to this application without departing from the scope of this application. In this way, this application is intended to cover these modifications and variations of this application provided that they fall within the scope of the claims of this application and their equivalent technologies.

## Claims

1. A secure communication method, comprising:

   receiving, by a first vehicle, a first message from a first terminal device, wherein the first message is used to indicate a number of the first vehicle in a vehicle platoon;

   sending, by the first vehicle, a first negotiation message, wherein the first negotiation message comprises a first negotiation parameter of the first vehicle, the number of the first vehicle in the vehicle platoon, and a certificate of the first vehicle;

   receiving, by the first vehicle, a first negotiation message from a second vehicle, wherein the second vehicle is another vehicle in the vehicle platoon other than the first vehicle, and the first negotiation message of the second vehicle comprises a first negotiation parameter of the second vehicle, a number of the second vehicle in the vehicle platoon, and a certificate of the second vehicle;

   determining, by the first vehicle after certificate verification of vehicles that are among the second vehicles and whose numbers are adjacent to the number of the first vehicle in the vehicle platoon succeeds, a second negotiation parameter based on first negotiation parameters of the vehicles whose numbers are adjacent to the number of the first vehicle in the vehicle platoon;

   sending, by the first vehicle, a second negotiation message, wherein the second negotiation message comprises the second negotiation parameter, the number of the first vehicle in the vehicle platoon, and the certificate of the first vehicle;

receiving, by the first vehicle, a second negotiation message from the second vehicle, wherein the second negotiation message from the second vehicle comprises a second negotiation parameter of the second vehicle, the number of the second vehicle in the vehicle platoon, and the certificate of the second vehicle; and generating, by the first vehicle based on a second negotiation parameter of each second vehicle after certificate verification of the second vehicle succeeds, a group key for performing secure communication with any vehicle in the vehicle platoon.

2. The method according to claim 1, wherein the first negotiation message of the second vehicle further comprises first signature data, wherein the first signature data is obtained through performing a signature operation by using the second negotiation parameter and the number of the second vehicle in the vehicle platoon.

3. The method according to claim 2, wherein the determining, by the first vehicle after certificate verification of vehicles whose numbers are adjacent to the number of the first vehicle in the vehicle platoon succeeds, a second negotiation parameter based on first negotiation parameters of the vehicles whose numbers are adjacent to the number of the first vehicle in the vehicle platoon comprises:
after the certificate verification of the second vehicle succeeds, and verification of the first signature data succeeds, determining, by the first vehicle, the second negotiation parameter based on the first negotiation parameters of the vehicles whose numbers are adjacent to the number of the first vehicle in the vehicle platoon.

4. The method according to any one of claims 1 to 3, wherein the second negotiation message of the second vehicle further comprises second signature data, wherein the second signature data is obtained through performing a signature operation by using the second negotiation parameter and the number of the second vehicle.

5. The method according to claim 4, wherein the generating, by the first vehicle based on a second negotiation parameter of each second vehicle after certificate verification of the second vehicle succeeds, a group key for performing secure communication with any vehicle in the vehicle platoon comprises:
after the certificate verification of the second vehicle succeeds, and verification of the second signature data succeeds, generating, by the first vehicle, the group key based on the second negotiation parameter of each second vehicle.

6. The method according to any one of claims 1 to 5, wherein the first message comprises a negotiation request field, vehicle information of the vehicle platoon, third signature data, and a certificate of the first device that sends the first message, wherein
the negotiation request field is used to trigger a vehicle in the vehicle platoon to send a first negotiation message, the vehicle information of the vehicle platoon comprises a vehicle identifier of each vehicle in the vehicle platoon and a number of the vehicle corresponding to the vehicle identifier in the vehicle platoon, the third signature data is obtained through encrypting a third digital digest by using a private key of the first terminal device, and the third digital digest is determined based on the preset digest algorithm by using the negotiation request field and the vehicle information of the vehicle platoon.

7. The method according to any one of claims 1 to 6, wherein the certificate of the first terminal device comprises a public key of the first terminal device; and
after the receiving, by a first vehicle, a first message, the method further comprises:
after certificate verification of the first terminal device succeeds, and certificate verification of the third signature data succeeds, determining, by the first vehicle based on the vehicle information of the vehicle platoon, the number corresponding to the vehicle identifier of the first vehicle.

8. The method according to any one of claims 1 to 7, wherein the method further comprises:
performing, by the first vehicle, an operation based on a first preset algorithm by using a first random number generated by the first vehicle, to obtain the first negotiation parameter.

9. The method according to any one of claims 1 to 8, wherein the determining, by the first vehicle, a second negotiation parameter based on the second negotiation parameter of the second vehicle comprises:
performing, by the first vehicle, an operation based on a second preset algorithm by using the first random number generated by the first vehicle and the first negotiation parameter of the second vehicle, to obtain the second negotiation parameter.

10. The method according to any one of claims 1 to 9, wherein the generating, by the first vehicle based on a second negotiation parameter of each second vehicle, a group key for performing secure communication with any vehicle in the vehicle platoon comprises:

performing, by the first vehicle, an operation based on a third preset algorithm by using the first random number generated by the first vehicle, the second negotiation parameter of the second vehicle, and a second negotiation parameter of a second vehicle whose number is after the number of the first vehicle in the vehicle platoon, to obtain the group key.

**11.** The method according to any one of claims 1 to 10, wherein the method further comprises:

before sending data to any vehicle in the vehicle platoon, encrypting, by the first vehicle by using the group key, the data that needs to be exchanged, and sending the encrypted data to the target vehicle; and/or
after receiving data from any vehicle in the vehicle platoon, decrypting, by the first vehicle, the received data by using the group key.

**12.** A secure communication method, comprising:

obtaining, by a first terminal device, vehicle information of a vehicle platoon from an application server, wherein the vehicle information of the vehicle platoon comprises a vehicle identifier of each vehicle in the vehicle platoon and a number of the vehicle corresponding to the vehicle identifier in the vehicle platoon; and
sending, by the first terminal device, a first message to each vehicle in the vehicle platoon, wherein the first message comprises a negotiation request field, the vehicle information of the vehicle platoon, third signature data, and a certificate of the first device that sends the first message, wherein
the negotiation request field is used to trigger a vehicle in the vehicle platoon to send a first negotiation message, the vehicle information of the vehicle platoon comprises a vehicle identifier of each vehicle in the vehicle platoon and a number of the vehicle corresponding to the vehicle identifier in the vehicle platoon, the third signature data is obtained through encrypting a third digital digest by using a private key of the first terminal device, and the third digital digest is determined based on the preset digest algorithm by using the negotiation request field and the vehicle information of the vehicle platoon.

**13.** The method according to claim 12, further comprising:

receiving, by the first terminal device, a first negotiation message from any other vehicle in the vehicle platoon; and sending, by the first terminal device, a first data packet to any other vehicle in the vehicle platoon, wherein the first data packet comprises a first negotiation message of any vehicle in the vehicle platoon; and/or
receiving, by the first terminal device, a second negotiation message from any other vehicle in the vehicle platoon; and sending, by the first terminal device, a second data packet to any other vehicle in the vehicle platoon, wherein the second data packet comprises a second negotiation message of any vehicle in the vehicle platoon.

**14.** The method according to claim 12 or 13, wherein the first terminal device is a vehicle with any number in the vehicle platoon, or the first terminal device is a roadside device RSU.

**15.** A secure communication apparatus, comprising:

a memory, configured to store program instructions and data;
a transceiver, configured to: receive a first message from a first terminal device, wherein the first message is used to indicate a number of the first vehicle in a vehicle platoon; send a first negotiation message, wherein the first negotiation message comprises a first negotiation parameter of the first vehicle, the number of the first vehicle in the vehicle platoon, and a certificate of the first vehicle; and receive a first negotiation message from a second vehicle, wherein the second vehicle is another vehicle in the vehicle platoon other than the first vehicle, and the first negotiation message of the second vehicle comprises a first negotiation parameter of the second vehicle, a number of the second vehicle in the vehicle platoon, and a certificate of the second vehicle; and
a processor, configured to: after certificate verification of vehicles whose numbers are adjacent to the number of the first vehicle in the vehicle platoon succeeds, determine a second negotiation parameter based on first negotiation parameters of the vehicles whose numbers are adjacent to the number of the first vehicle in the vehicle platoon; wherein
the transceiver is further configured to: send a second negotiation message, wherein the second negotiation message comprises the second negotiation parameter, the number of the first vehicle in the vehicle platoon, and the certificate of the first vehicle; and receive a second negotiation message from the second vehicle, wherein the second negotiation message from the second vehicle comprises a second negotiation parameter of the second vehicle, the number of the second vehicle in the vehicle platoon, and the certificate of the second vehicle; and

the processor is further configured to: after certificate verification of the second vehicle succeeds, generate, based on a second negotiation parameter of each second vehicle, a group key for performing secure communication with any vehicle in the vehicle platoon.

16. A first terminal device for secure communication, comprising:

a memory, configured to store program instructions and data; and
a transceiver, configured to: obtain vehicle information of a vehicle platoon from an application server, wherein the vehicle information of the vehicle platoon comprises a vehicle identifier of each vehicle in the vehicle platoon and a number of the vehicle corresponding to the vehicle identifier in the vehicle platoon; and send a first message to each vehicle in the vehicle platoon, wherein the first message comprises a negotiation request field, the vehicle information of the vehicle platoon, third signature data, and a certificate of the first device that sends the first message, wherein the negotiation request field is used to trigger a vehicle in the vehicle platoon to send a first negotiation message, the vehicle information of the vehicle platoon comprises a vehicle identifier of each vehicle in the vehicle platoon and a number of the vehicle corresponding to the vehicle identifier in the vehicle platoon, the third signature data is obtained through encrypting a third digital digest by using a private key of the first terminal device, and the third digital digest is determined based on the preset digest algorithm by using the negotiation request field and the vehicle information of the vehicle platoon.

17. A computer program, wherein when the computer program is run on a computer, the computer is enabled to perform the method according to any one of claims 1 to 11, or perform the method according to any one of claims 12 to 14.

18. A computer storage medium, wherein the computer storage medium stores a computer program, and when the computer program is executed by a computer, the computer is enabled to perform the method according to any one of claims 1 to 11, or perform the method according to any one of claims 12 to 14.

19. A chip, wherein the chip is configured to read a computer program stored in a memory, to perform the method according to any one of claims 1 to 11, or perform the method according to any one of claims 12 to 14.

20. A secure communication system, comprising an application server, a secure communication apparatus, and a first terminal device, wherein

the application server is configured to send vehicle information of a vehicle platoon to the first terminal device; the first terminal device is configured to: obtain the vehicle information of the vehicle platoon from the application server, wherein the vehicle information of the vehicle platoon comprises a vehicle identifier of each vehicle in the vehicle platoon and a number of the vehicle corresponding to the vehicle identifier in the vehicle platoon; and send a first message to each vehicle in the vehicle platoon, wherein the first message comprises a negotiation request field, the vehicle information of the vehicle platoon, third signature data, and a certificate of the first device that sends the first message, wherein the negotiation request field is used to trigger a vehicle in the vehicle platoon to send a first negotiation message, the vehicle information of the vehicle platoon comprises a vehicle identifier of each vehicle in the vehicle platoon and a number of the vehicle corresponding to the vehicle identifier in the vehicle platoon, the third signature data is obtained through encrypting a third digital digest by using a private key of the first terminal device, and the third digital digest is determined based on the preset digest algorithm by using the negotiation request field and the vehicle information of the vehicle platoon; and the secure communication apparatus is configured to: receive the first message from the first terminal device, wherein the first message is used to indicate a number of the first vehicle in the vehicle platoon; send a first negotiation message, wherein the first negotiation message comprises a first negotiation parameter of the first vehicle, the number of the first vehicle in the vehicle platoon, and a certificate of the first vehicle; receive a first negotiation message from a second vehicle, wherein the second vehicle is another vehicle in the vehicle platoon other than the first vehicle, and the first negotiation message of the second vehicle comprises a first negotiation parameter of the second vehicle, a number of the second vehicle in the vehicle platoon, and a certificate of the second vehicle; after certificate verification of vehicles whose numbers are adjacent to the number of the first vehicle in the vehicle platoon succeeds, determine a second negotiation parameter based on first negotiation parameters of the vehicles whose numbers are adjacent to the number of the first vehicle in the vehicle platoon;

determine a second negotiation parameter based on first negotiation parameters of the vehicles whose numbers are adjacent to the number of the first vehicle in the vehicle platoon; receive a second negotiation message from the second vehicle, wherein the second negotiation message of the second vehicle comprises a second negotiation parameter of the second vehicle, the number of the second vehicle in the vehicle platoon, and the certificate of the second vehicle; and after certificate verification of the second vehicle succeeds, generate, based on a second negotiation parameter of each second vehicle, a group key for performing secure communication with any vehicle in the vehicle platoon.

FIG. 1

Application server

Leading vehicle (number 1)

Group member
vehicle (number 2)

Group member
vehicle (number 3)

Group member
vehicle (number 4)

FIG. 2

| Second vehicle | First vehicle | First terminal device | Application server |
|---|---|---|---|

300: The first terminal device obtains vehicle information of a vehicle platoon from the application server

301: The first terminal device sends a first message to each vehicle in the vehicle platoon

302: Receive the first message sent by the first terminal device

303: Send a first negotiation message

304: The first vehicle receives the first negotiation message from the second vehicle in the vehicle platoon

305: After certificate verification of vehicles whose numbers are adjacent to a number of the first vehicle in the vehicle platoon succeeds, the first vehicle determines a first group key parameter based on second negotiation parameters of the second vehicles

306: Send a second negotiation message

307: The first vehicle receives the second negotiation message from the second vehicle in the vehicle platoon

308: After certificate verification of the second vehicle succeeds, the first vehicle determines a group key based on the second negotiation parameter of the second vehicle

FIG. 3

| Group member vehicle | Leading vehicle | Application server |
|---|---|---|

401: The application server preconfigures, for a vehicle participating in vehicle platooning driving, a common parameter and a vehicle certificate that are required for group key negotiation

402: The leading vehicle sends a vehicle platoon establishment request to the application server

403: The leading vehicle obtains vehicle information of a vehicle platoon from the application server

404: The leading vehicle performs, with a group member vehicle based on the vehicle information of the vehicle platoon, a group key negotiation process with message authentication

405: The leading vehicle and the member vehicle complete the group key negotiation process, and separately generate a group key

406: Vehicles in the vehicle platoon perform secure communication with each other by using the group key

FIG. 4

| Group member vehicle | Leading vehicle | Application server |
|---|---|---|

501: The application server preconfigures, for a vehicle participating in vehicle platooning driving, a common parameter and a vehicle certificate that are required for group key negotiation

502: The leading vehicle sends a vehicle platoon establishment request to the application server

504: The leading vehicle broadcasts a first message M1 to each group member vehicle in the vehicle platoon

503: The leading vehicle obtains vehicle information of a vehicle platoon from the application server

505: Perform verification on the first message, and when the verification succeeds, a group key negotiation process is executed; or when the verification fails, the message is discarded

506: Generate a first negotiation message after the verification of the first message succeeds

507: Broadcast a first negotiation message M2

508: Perform verification on a first negotiation message received from another vehicle, and generate a second negotiation message M3 after the verification succeeds

509: Broadcast a first negotiation message M3

510: Perform verification on an obtained second negotiation message of any other vehicle, and after the verification succeeds, generate a group key by using the obtained second negotiation message of any other vehicle

511: Perform secure communication with any other vehicle in the vehicle platoon by using the group key

FIG. 5

Vehicle 1    M1      M2    Vehicle 2

Vehicle 4    M4      M3    Vehicle 3

FIG. 6

Vehicle 1    M1'      M2'    Vehicle 2

Vehicle 4    M4'      M3'    Vehicle 3

FIG. 7

| Group member vehicle | Leading vehicle | Application server |
|---|---|---|

801: The application server preconfigures, for a vehicle participating in vehicle platooning driving, a common parameter and a vehicle certificate that are required for group key negotiation

802: The leading vehicle sends a vehicle platoon establishment request to the application server

804: The leading vehicle broadcasts a first message M1 to each group member vehicle in the vehicle platoon

803: The leading vehicle obtains vehicle information of a vehicle platoon from the application server

805: Perform verification on the first message, and when the verification succeeds, a group key negotiation process is executed; or when the verification fails, the message is discarded

806: Generate a first negotiation message M2 after the verification of the first message succeeds

807: Send the first negotiation message M2 to the leading vehicle

808: The leading vehicle performs verification on first negotiation messages received from other vehicles in the vehicle platoon, and generates a first data packet after the verification succeeds

TO
FIG. 8B

TO
FIG. 8B

TO
FIG. 8B

FIG. 8A

CONT.
FROM
FIG. 8A

CONT.
FROM
FIG. 8A

CONT.
FROM
FIG. 8A

809: Send the first data packet

810: Perform verification on the received first data packet, and generate a second negotiation message M3 after the verification of the first data packet succeeds

811: Send the second negotiation message M3 to the leading vehicle

812: The leading vehicle performs verification on second negotiation messages received from other vehicles in the vehicle platoon, and generates a second data packet after the verification succeeds

813: Send the second data packet

814: Perform verification on the received second data packet, and generate a group key after the verification of the second data packet succeeds

815: A vehicle in the vehicle platoon performs secure communication with any other vehicle in the vehicle platoon by using the group key

FIG. 8B

Apparatus 900

Processing unit 901 —— Communication unit 902

FIG. 9

Apparatus 1000

Processor
1020

Communication
interface
1010

1040

Memory 1030

FIG. 10

## INTERNATIONAL SEARCH REPORT

| International application No. |
| --- |
| **PCT/CN2020/082614** |

### A. CLASSIFICATION OF SUBJECT MATTER

H04L 9/32(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: 车, 队, 协商, 证书, 摘要, 加密, 编号, 组密钥, vehicle, convoy, negotiate, certificate, digest, encrypt, number, ID, group key

### C. DOCUMENTS CONSIDERED TO BE RELEVANT

| Category* | Citation of document, with indication, where appropriate, of the relevant passages | Relevant to claim No. |
| --- | --- | --- |
| A | CN 108632888 A (ZTE CORPORATION) 09 October 2018 (2018-10-09) description, paragraphs [0178]-[0187] and [0402]-[0411] | 1-20 |
| A | CN 110798812 A (HUAWEI TECHNOLOGIES CO., LTD.) 14 February 2020 (2020-02-14) entire document | 1-20 |
| A | CN 109640325 A (XI'AN UNIVERSITY OF POSTS AND TELECOMMUNICATIONS) 16 April 2019 (2019-04-16) entire document | 1-20 |
| A | CN 109963265 A (SONY CORPORATION) 02 July 2019 (2019-07-02) entire document | 1-20 |
| A | US 2019306680 A1 (JAGUAR LAND ROVER LIMITED) 03 October 2019 (2019-10-03) entire document | 1-20 |
| A | US 10440668 B1 (FORD GLOBAL TECHNOLOGIES, LLC.) 08 October 2019 (2019-10-08) entire document | 1-20 |
| A | HUAWEI et al. "Editorial corrections for eV2X TR 33.836" *3GPP TSG SA-WG3 Meeting #96 Ad-Hoc S3-193326*, 18 October 2019 (2019-10-18), entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 December 2020** | **30 December 2020** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

<table>
<tr><td colspan="3" align="center"><b>INTERNATIONAL SEARCH REPORT</b><br><b>Information on patent family members</b></td><td colspan="2">International application No.<br><br><b>PCT/CN2020/082614</b></td></tr>
</table>

| Patent document cited in search report | | | Publication date (day/month/year) | Patent family member(s) | | | Publication date (day/month/year) |
|---|---|---|---|---|---|---|---|
| CN | 108632888 | A | 09 October 2018 | WO | 2018171712 | A1 | 27 September 2018 |
| CN | 110798812 | A | 14 February 2020 | | None | | |
| CN | 109640325 | A | 16 April 2019 | | None | | |
| CN | 109963265 | A | 02 July 2019 | WO | 2019128795 | A1 | 04 July 2019 |
| | | | | CN | 111052773 | A | 21 April 2020 |
| | | | | US | 2020235887 | A1 | 23 July 2020 |
| | | | | KR | 2020100115 | A | 25 August 2020 |
| | | | | EP | 3735004 | A1 | 04 November 2020 |
| US | 2019306680 | A1 | 03 October 2019 | DE | 112017003448 | T5 | 09 May 2019 |
| | | | | CN | 109416871 | A | 01 March 2019 |
| | | | | GB | 201611914 | D0 | 24 August 2016 |
| | | | | GB | 2554135 | B | 20 May 2020 |
| | | | | GB | 2554135 | A | 28 March 2018 |
| | | | | US | 10609528 | B2 | 31 March 2020 |
| | | | | GB | 201710501 | D0 | 16 August 2017 |
| | | | | WO | 2018007254 | A1 | 11 January 2018 |
| | | | | GB | 2552029 | B | 20 May 2020 |
| | | | | GB | 2552029 | A | 10 January 2018 |
| US | 10440668 | B1 | 08 October 2019 | CN | 111163438 | A | 15 May 2020 |
| | | | | DE | 102019129702 | A1 | 07 May 2020 |

Form PCT/ISA/210 (patent family annex) (January 2015)